# EUROPEAN PATENT APPLICATION

(11) **EP 2 897 111 A1**
(43) Date of publication of application: **22.07.2015**
(21) Application number: 13878505.0
(22) Date of filing: 14.05.2013
(51) Int. Cl.: G07G 1/12, A63F 3/06, G06Q 30/02, G07G 1/06

(54) **SALES PROMOTION SYSTEM, SALES PROMOTION METHOD, AND STORAGE MEDIUM HAVING SALES PROMOTION PROGRAM STORED THEREON**

(30) Priority: 11.03.2013 JP 2013047979
(71) Applicant: NEC Platforms, Ltd., Kanagawa 213-8511 (JP); NEC Corporation, Tokyo 108-8001 (JP)
(72) Inventor: MIYATA, Kotaro, Kawasaki-shi Kanagawa 213-8511 (JP); ISHII, Akihiko, Tokyo 108-8001 (JP)
(74) Representative: Vossius & Partner Patentanwälte Rechtsanwälte mbB
(86) International application number: PCT/JP2013/003080
(87) International publication number: WO 2014/141325

(57) **Abstract**

As for numbers for a bingo game to be compared with a sequence (102) of numbers in each square of a bingo card (100) for a bingo game, which is randomly selected and issued before execution of a payment settlement process, a POS device extracts, as extracted numbers (204) for the bingo game, a combination of two adjacent numbers from number information included in purchased commodity information (202) printed on a receipt (200) during execution of the payment settlement process, registers, in an extracted number registration table, the extracted numbers in such a manner that the extracted numbers are linked to identification numbers respectively represented by a barcode (201) on the receipt (200) and a barcode (101) on the bingo card (100), and uses the extracted numbers (204) based on the purchased commodity information (202) to determine whether or not a bingo has occurred. When a bingo has occurred as a result of the bingo game, privileges, such as a free gift or issuance of a discount ticket, are handed to the customer. This contributes to an increase in the number of repeat customers and an increase in unit price per customer.

## Description

### Technical Field

The present invention relates to a sales promotion system, a sales promotion method, and a storage medium storing a sales promotion program, and more particularly, to a sales promotion system, a sales promotion method, and a sales promotion program which achieve a mechanism capable of increasing customers' willingness to purchase commodities by issuing a receipt with game properties. The present invention is applicable to various business categories in which a receipt is issued, such as grocery stores, convenience stores, family restaurants, and pubs.

### Background Art

In recent years, POS (Point Of Sales) devices capable of individually managing the selling status and stock status of each commodity to be handled and performing a sales operation, to be more specific, a payment settlement process for each commodity purchased by a customer, have been introduced not only in large stores, such as supermarkets, convenience stores, and department stores, but also in small- and medium-sized stores. In general, a POS device reads a barcode attached to a commodity to obtain a commodity code for identifying the commodity to be purchased, and registers the commodity. In addition, the POS device calculates the total amount of payment by manipulating a "settlement" key and applying the unit price and discount rate for each registered commodity, shows the calculated amount of payment to the customer, performs the payment settlement process, and issues a receipt on which information about the commodities to be purchased is printed as a detailed purchase statement.

On the other hand, to promote sales in stores, there is a strong demand for a sales promotion tool for increasing the number of regular customers and the number of repeat customers and for increasing the unit price per customer. Accordingly, various proposals for increasing the unit price per customer have been made. For example, stores have made efforts to increase customers' willingness to purchase commodities by giving them privileges. Examples of the privileges include "a 20% price reduction on the purchase amount is applied to any customer who has purchased three of these commodities", "a 5% discount rate on the purchase amount is applied to every customer who is enrolled as a member of this store", "You will receive a discount ticket when you use 10,000 yen or more in a purchase", "You can buy 5,000 yen worth of commodities at the price of 3,000 yen on bargain days. However, purchases are limited to three for each person", "If you pay a fee one year in advance, a 10% discount is applied", and "The commodities are available for only xx days! You will receive some free gift if you purchase ○○".

As a part of the proposals, a sales promotion tool that works in conjunction with a POS device has been proposed. For example, Patent Literature 1, "Coupon Issuing Device", which is disclosed in Japanese Unexamined Patent Application Publication No. 2002-216247, proposes a service that offers a customer membership system, issues an ID card, which works in conjunction with a POS device, to each member customer, and issues coupons or gives service points to every customer who shows the ID card, according to certain conditions such as the purchase amount.

### Citation List

### Patent Literature

PTL 1: Japanese Unexamined Patent Application Publication No. 2002-216247 (pp. 4-7)

### Summary of Invention

### Technical Problem

However, the sales promotion method of the related art including the technique disclosed in Patent Literature 1 provides a mechanism in which the privileges, such as discounts and reception of coupons, and "profitable" free gifts or the like are handed to customers with no exception as long as a certain condition is met. This mechanism causes a problem that the profit margin is reduced. Another problem to be solved is that the mechanism gives the customers, who meet the condition, an impression that it is wasteful to purchase large quantities of the same commodity, while the mechanism is unattractive for the customers who do not meet the condition to purchase commodities, which makes it difficult to increase the unit price per customer.

### (Object of the present invention)

The present invention has been made in view of the above-mentioned circumstances, and an object of the present invention is to provide a sales promotion system, a sales promotion method, and a sales promotion program which have game properties and are capable of increasing the number of repeat customers and the unit price per customer so as to effectively promote the sales of commodities.

### Solution to Problem

To solve the above-mentioned problem, a sales promotion system, a sales promotion method, and a sales promotion program according to the present invention have the following main features.
(1) A sales promotion system according to the present invention includes a POS (Point Of Sales) device that performs a payment settlement process for a purchased commodity and issues a receipt on which information about the purchased commodity is printed, in which during the payment settlement process for the purchased commodity, a bingo card identification number for identifying a randomly-selected bingo card for a bingo game is input to the POS device, and the POS device extracts, as numbers for the bingo game to be compared with numbers in each square of the bingo card, a combination of two adjacent numbers from number information included in the information about the purchased commodity printed on the receipt, registers, in an extracted number registration table, the extracted combination of two numbers as extracted numbers for the bingo game in such a manner that the extracted combination of numbers is linked to the bingo card identification number and a receipt identification number for identifying the receipt, and prints the receipt identification number on the receipt on which the information about the purchased commodity is printed.
(2) A sales promotion method for a POS (Point Of Sales) device that performs a payment settlement process for a purchased commodity, and issues a receipt on which information about the purchased commodity is written, the sales promotion method including: inputting, during the payment settlement process for the purchased commodity, a bingo card identification number for identifying a randomly-selected bingo card for a bingo game to the POS device; extracting, by the POS device, as numbers for the bingo game to be compared with numbers in each square of the bingo card, a combination of two adjacent numbers from number information included in the information about the purchased commodity printed on the receipt, registering, in an extracted number registration table, the extracted combination of two numbers as extracted numbers for the bingo game in such a manner that the extracted combination of numbers is linked to the bingo card identification number and a receipt identification number for identifying the receipt, and printing the receipt identification number on the receipt on which the information about the purchased commodity is printed.
(3) A sales promotion program according to the present invention executes the sales promotion method set forth in the above item (2) as a computer-executable program.

### Advantageous Effects of Invention

A sales promotion system, a sales promotion method, and a sales promotion program according to the present invention provide the following advantageous effects.

First, a contrivance can be provided in which a bingo game can be performed using number information (commodity code, the number of purchased commodities, purchase unit price, total amount, discount rate, discount amount, etc.), which is linked to the purchased commodities printed on a receipt during a payment settlement process for the purchased commodities, so that privileges, such as a free gift, a discount ticket, or a coupon, can be handed only to the customers who have won the bingo game, and only the customers who have purchased commodities can participate in the game, thereby increasing the chance to win the bingo game in accordance with an increase in the number of pieces of number information linked to the purchased commodities printed on the receipt. This makes it possible to encourage the customers to purchase more commodities, give the customers a sense of satisfaction that they can participate in the bingo game and enjoy the game even if they cannot be granted the privileges when they lose the bingo game, and achieve both an increase in unit price per customer and acquisition of repeat customers.

Second, when the payment settlement process for the purchased commodities is carried out, a bingo card used for the bingo game is randomly selected from among bingo cards prepared in advance, regardless of which commodities the customers have purchased, and the selected bingo card is handed to the customers together with the commodities and the receipt. This enables the customers to easily understand that the obtained bingo card is not intentionally selected by the store. In addition, the customers are prevented from obtaining a bingo card before purchasing commodities and from selecting the commodities, based on which a bingo is obtained, according to the sequence of numbers on the obtained bingo card. Accordingly, the unit price per customer can be reliably increased.

Third, it is also possible to install a bingo card automatic determination machine or a POS device as a bingo determination device capable of automatically determining whether or not a bingo has occurred. Accordingly, customers who do not have enough time to play the bingo game can also receive the privileges, such as a free gift, a discount ticket, or a coupon, by immediately confirming whether or not a bingo has occurred, merely by causing the bingo determination device to read one or both of the receipt and the bingo card, without the need for the customers themselves to play the bingo game.

### Brief Description of Drawings

Fig. 1 is a system configuration diagram showing a system configuration example of a sales promotion system according to a first exemplary embodiment of the present invention;
Fig. 2 is a system configuration diagram showing a modified example of the system configuration of the sales promotion system according to the first exemplary embodiment of the present invention;
Fig. 3 is an explanatory diagram for explaining an example of an operation of a POS device in the sales promotion system shown in Figs. 1 and 2;
Fig. 4 is an explanatory diagram for explaining an example of an execution method for executing a bingo game by using a combination of a bingo card shown in Fig. 3 and information about registered commodities on the receipt;
Fig. 5 is an explanatory diagram for explaining an example of an operation of a bingo card automatic determination machine installed at a service counter or the like;
Figs. 6 are explanatory diagrams for explaining an example of the association between information about a barcode on the bingo card shown in Fig. 3 and a combination of numbers that form a bingo pattern;
Fig. 7 is a table showing an example of a bingo establishment condition registration table provided in the bingo card automatic determination machine or the POS device;
Figs. 8 are explanatory diagrams for explaining an example of the association between information (receipt identification number) about a barcode on the receipt shown in Fig. 4 and a combination of extracted numbers which are extracted for a bingo game from the receipt;
Fig. 9 is a table showing an example of an extracted number registration table provided in the POS device;
Fig. 10 is an explanatory diagram for explaining an example of the association between a bingo card and a receipt;
Figs. 11 are explanatory diagrams for explaining a state in which a bingo has occurred when a bingo game is performed using a plurality of receipts with a bingo card;
Fig. 12 is an explanatory diagram for explaining an example of printing a receipt with a bingo card when the image of the bingo card is disposed at an uppermost position of the receipt;
Fig. 13 is an explanatory diagram for explaining an example of printing a receipt with a bingo card when both the bingo card image and the bingo game result indicating whether or not a bingo has occurred are printed on the receipt;
Fig. 14 is a system configuration diagram showing a system configuration example of a sales promotion system according to a second exemplary embodiment of the present invention;
Fig. 15 is a table showing an example of the bingo establishment condition registration table which is different from the bingo establishment condition registration table shown in Fig. 7 which is included in the bingo game machine or the POS device;
Fig. 16 is a table showing an example of the extracted number registration table which is different from the extracted number registration table shown in Fig. 9 which is included in the POS device; and
Fig. 17 is an explanatory diagram for explaining an example of an operation of the bingo game machine installed at a service counter or the like.

### Description of Embodiments

Hereinafter, preferred exemplary embodiments of a sales promotion system, a sales promotion method, and a sales promotion program according to the present invention will be described with reference to the accompanying drawings. While the sales promotion system and the sales promotion method according to the present invention will be described below, the sales promotion method may be implemented as a sales promotion program which can be executed by a computer, or the sales promotion program may be recorded in a computer-readable storage medium.

### (Features of the present invention)

The outline of features of the present invention will now be described prior to the description of exemplary embodiments of the present invention. The main feature of the present invention is that a bingo card randomly selected before a payment settlement process for purchased commodities and a receipt linked to the bingo card are issued; a bingo game is performed using the bingo card linked to the receipt based on a combination of numbers extracted for the bingo game from number information about the purchased commodities printed on the receipt; and privileges such as a free gift, a discount ticket, or a coupon are handed to the customers who have won the bingo game. This makes it possible to increase the customers' motivation to increase their probability of winning the bingo game by increasing the number of combinations of numbers relating to the purchased commodities printed on the receipt, increase customers' willingness to purchase commodities, and encourage the customers to purchase a large number of commodities. This contributes to an increase in the unit price per customer. Moreover, even the customers who have lost the bingo game can enjoy the bingo game, which leads to an increase in the number of repeat customers.

### (System Configuration Example of First Exemplary Embodiment)

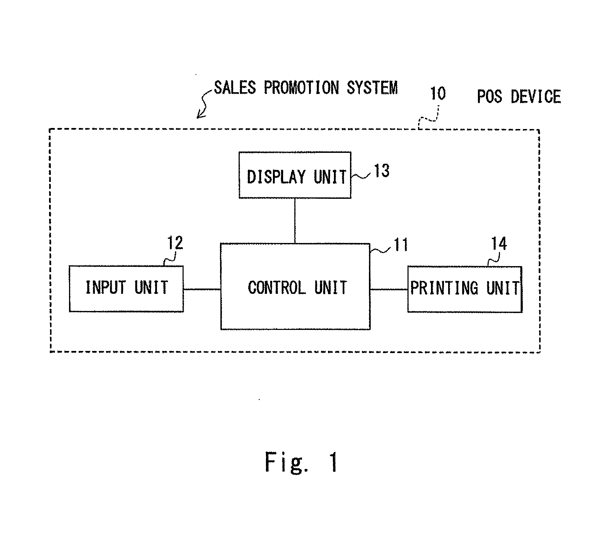

Next, a system configuration example of a sales promotion system according to a first exemplary embodiment of the present invention will be described. Fig. 1 is a system configuration diagram showing a system configuration example of the sales promotion system according to the first exemplary embodiment of the present invention, and illustrates a case where the sales promotion system is composed of a single POS device.

As shown in Fig. 1, a POS device 10 that constitutes the sales promotion system according to the present invention includes at least a control unit 11, an input unit 12, a display unit 13, and a printing unit 14. The control unit 11 is a section that controls the entire POS device 10. The input unit 12 is a section that inputs information to the POS device 10, and includes, for example, a barcode reader (such as a stationary scanner or a handy scanner), touch panel keys, and a keyboard. The display unit 13 is a display that displays information for an operator such as a sales clerk, and includes, for example, an LCD (Liquid Crystal Display). The printing unit 14 is a section that prints a receipt and the like, and includes, for example, a thermal printer.

### (Modified Example of First Exemplary Embodiment)

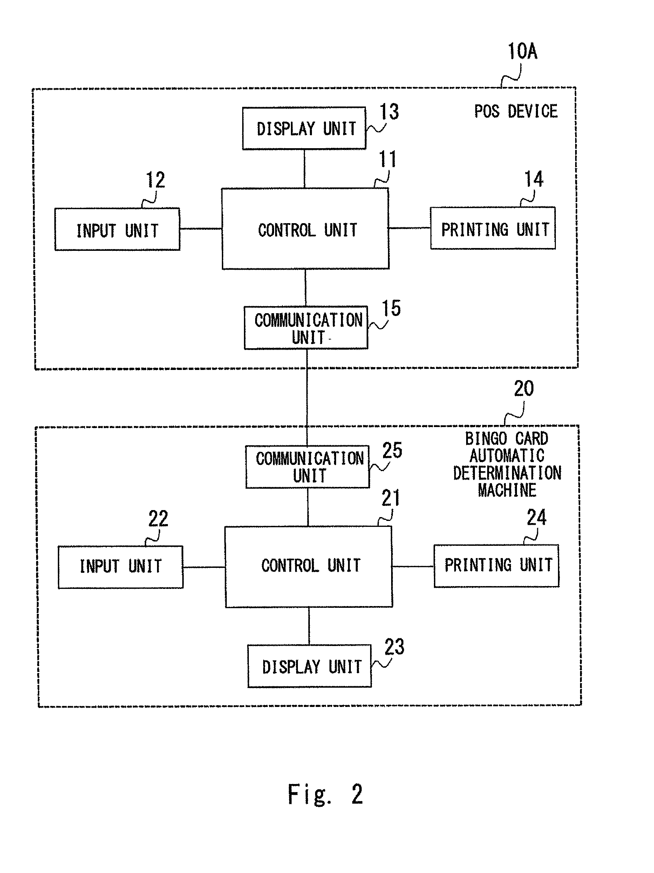

Next, a modified example of the system configuration of the sales promotion system according to the first exemplary embodiment of the present invention will be described. Fig. 2 is a system configuration diagram showing a modified example of the system configuration of the sales promotion system according to the first exemplary embodiment of the present invention, and illustrates an example in which a POS device and a bingo card automatic determination machine are connected to each other. In the case of the sales promotion system shown in Fig. 1, the POS device 10 itself has a function of determining whether or not a bingo has occurred on a bingo bard distributed to each customer for sales promotion during the payment settlement process performed by the POS device 10. On the other hand, Fig. 2 illustrates a case where a bingo card automatic determination machine having a dedicated function for determining whether or not a bingo has occurred on a bingo card distributed to each customer for sales promotion is installed at, for example, a service center, separately from the POS device.

As shown in Fig. 2, a POS device 10A, which is one of the devices that constitute the sales promotion system according to the present invention, includes at least the control unit 11, the input unit 12, the display unit 13, and the printing unit 14, like the POS device 10 shown in Fig. 1. The device 10A further includes at least a communication unit 15. The functions of the control unit 11, the input unit 12, the display unit 13, and the printing unit 14 are similar to those shown in Fig. 1. The communication unit 15 is a section that communicates with a bingo card automatic determination machine 20, which is the other one of the devices that constitute the sales promotion system shown in Fig. 2, and is configured using a communication system such as a wired/wireless LAN (Local Area Network) or Bluetooth (registered trademark).

The bingo card automatic determination machine 20, which is the other one of the devices that constitute the sales promotion system shown in Fig. 2, includes at least a control unit 21, an input unit 22, a display unit 23, a printing unit 24, and a communication unit 25. The control unit 21 is a section that controls the entire bingo card automatic determination machine 20. The input unit 22 is a section that inputs information to the bingo card automatic determination machine 20, and includes, for example, touch panel keys and a keyboard. The display unit 23 is a section that displays the information received from the bingo card automatic determination machine 20 for a sales clerk (clerk in charge), and includes, for example, an LCD. The printing unit 24 is a section that prints bingo determination results and the like, and includes, for example, a thermal printer. The communication unit 25 is a section that communicates with the POS device 10A, which is one of the devices that constitute the sales promotion system shown in Fig. 2, and is configured using a communication system such as a wired/wireless LAN (Local Area Network) or Bluetooth.

Fig. 2 illustrates the case where the bingo card automatic determination machine 20 having a dedicated function for determining whether or not a bingo has occurred on a bingo card distributed to each customer for sales promotion is installed. However, instead of using a dedicated device such as the bingo card automatic determination machine 20, the POS device 10A having a configuration in which the function for determining whether or not a bingo has occurred on a bingo card is provided in addition to the function for performing the payment settlement process may be used instead of the bingo card automatic determination machine 20. In such a case, two POS devices 10A can be connected to each other and whether or not a bingo has occurred can be determined not only in the POS device 10A which has performed the payment settlement process, but in either one of the POS devices 10A.

As described in detail later, the bingo card automatic determination machine 20 and the POS device 10 include a bingo establishment condition registration table in which each combination of numbers is registered in advance as bingo establishment conditions for each piece of information (bingo card identification number) for identifying a bingo card image. The bingo establishment condition registration table may also be provided in the POS device 10A in some cases.

The POS devices 10 and 10A which carry out the payment settlement process for purchased commodities include an extracted number registration table in which a combination of two adjacent numbers from the number information relating to the purchased commodities printed on a receipt is registered as extracted numbers used for a bingo game for each piece of information (receipt identification number) for identifying the receipt, during the payment settlement process, as described in detail later. As shown in Fig. 2, as for the POS device 10A including the communication unit 15, the extracted number registration table may be centrically arranged in a specific POS device 10A in some cases, instead of dispersedly arranging the extracted number registration table in each POS device 10A. In such a case, the extracted numbers which are extracted during the payment settlement process in each POS device 10A, as well as the identification number of the corresponding receipt, may be transferred to a specific POS device.

### (Explanation of Operation of First Exemplary Embodiment)

Next, an example of the operation of the sales promotion system, which is illustrated as the first exemplary embodiment in Figs. 1 and 2, will be described. First, a sales operation, i.e., a payment settlement process for commodities to be purchased by a customer, in a general POS device of the related art will be described. A sales clerk (cashier) who operates a POS device operates the input unit of the POS device to read, one by one, the barcodes on the commodities, which are brought by a customer to purchase them, as registered commodities by using the input unit including a barcode reader, such as a stationary scanner or a handy scanner.

Upon completion of the operation of registering commodities after the operation of reading the barcodes on all commodities to be purchased by the customer through the input unit, the sales clerk presses a "settlement" key to add up the total charge in the case of using a general POS device of the related art. When the "settlement" key is pressed, the prices of all commodities (registered commodities) with barcodes read by the input unit are added up and displayed on the display unit. The sales clerk shows the total amount of the charge, which is displayed on the display unit, to the customer and charges the customer that amount. Upon receiving the payment for the commodities from the customer, the sales clerk hands over the commodities and the receipt printed by the printing unit to the customer, to thereby complete the sales operation.

Next, the sales operation, i.e., the payment settlement process for purchased commodities, in the POS devices 10 and 10A of the sales promotion system according to this exemplary embodiment shown in Figs. 1 and 2 will be described. In the sales promotion system shown in Figs. 1 and 2, bingo cards each having a barcode are prepared in advance in a cash register. The barcode is a code representing information (bingo card identification number) for identifying a bingo card. As in the case of the POS device of the related art described above, a sales clerk (cashier) performs the operation of reading the barcode on each commodity by the barcode reader of the input unit 12 in the POS device 10 or the POS device 10A before the commodity registration operation. After that, unlike in the case of the POS device of the related art described above, the sales clerk (cashier) randomly selects a bingo card from among one or more bingo cards, which are prepared in advance in the cash register, instead of pressing the "settlement" key, and then operates the barcode reader of the input unit 12 to read the barcode on the selected bingo card.

Upon completion of the operation of reading the barcode on the bingo card, the POS devices 10 and 10A automatically shift to the settlement operation, so that the prices of all commodities (registered commodities) with barcodes read by the input unit 12 are added up and displayed on the display unit 13. The sales clerk shows the total amount of the charge, which is displayed on the display unit 13, to the customer and charges the customer that amount. Upon receiving the payment for the registered commodities from the customer, the sales clerk hands over the receipt printed by the printing unit 14, as well as the bingo card and the commodities, to the customer, to thereby complete the sales operation.

Unlike the case of the POS device of the related art described above, the POS devices 10 and 10A, which have performed the sales operation, i.e., the payment settlement process, include the extracted number registration table. In the extracted number registration table, the information (receipt identification number) for identifying the receipt issued to the customer and the information (bingo card identification number) about the bingo card which is read in advance together with the extracted numbers extracted as a combination of numbers used for the bingo game from the information about the registered commodities are registered in such a manner that these pieces of information are linked to each other, upon completion of the payment settlement process. The POS devices 10 and 10A may further print the information (bingo card identification number) for identifying the bingo card on the receipt so that the customer can identify the relationship between the received bingo card and the receipt on which the number information about the purchased commodities for the bingo game is printed. It is preferable that the information (bingo card identification number) for identifying the bingo card be printed as numbers.

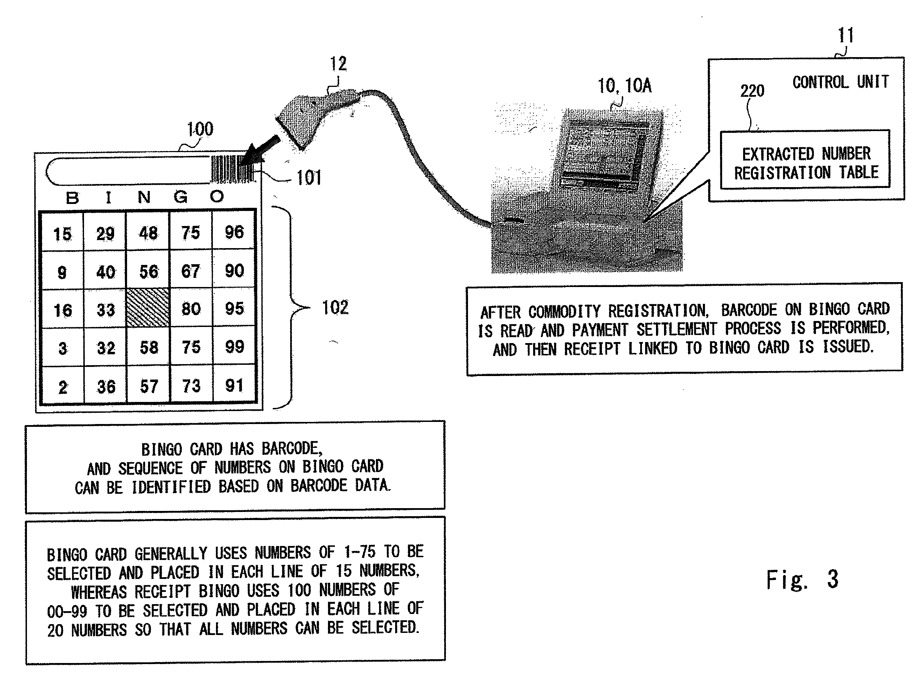

Specifically, in the sales promotion system shown in Figs. 1 and 2, the operation of reading the barcode on the bingo card means the operation of pressing the "settlement" key. Further, when the sales clerk (cashier) hands over the registered commodities (purchased commodities) to the customer, the receipt on which the information about the registered commodities is printed and which is linked to the bingo card that is randomly selected from among the bingo cards prepared in advance in the cash register and is handed to the customer, is issued to the customer together with the bingo card. Fig. 3 is an explanatory diagram for explaining an example of an operation of the POS devices 10 and 10A in the sales promotion system shown in Figs. 1 and 2, and illustrates a basic operation for issuing a receipt linked to information about a bingo card.

As shown in Fig. 3, a barcode 101 is provided on a bingo card 100, which is prepared in advance at a cash register, and information for identifying a number sequence 102 on the bingo card 100, that is, information (bingo card identification number) for identifying the bingo card 100, is printed as data for the barcode 101. After the sales clerk (cashier) who operates the POS devices 10 and 10A reads the barcodes on all commodities to be purchased and completes the registration operation, the sales clerk operates the barcode reader of the input unit 12 to read the barcode 101 on the bingo card 100, thereby performing the operation of closing an account instead of pressing the "settlement" key.

After that, the payment settlement process for the purchased commodities (registered commodities) is carried out. When the payment for the purchased commodities (registered commodities) is received from the customer and a receipt is to be issued, the information (bingo card identification number) for identifying the bingo card 100, which is included in the read barcode 101, and the information (receipt identification number) for identifying the receipt to be issued are linked to each other so that the bingo card 100 to be handed to the customer can be identified. These pieces of information and the data on the extracted numbers extracted as a combination of numbers used for the bingo game from the number information about the purchased commodities (registered commodities) are registered and stored in an extracted number registration table 220 included in the control unit 11 of the POS devices 10 and 10A.

The information (bingo card identification number) for identifying the bingo card 100 is printed on the receipt as a character string, which can be read by the customer, so that the customer can recognize the relation between the bingo card 100 and the receipt. In some cases, the information (bingo card identification number) for identifying the bingo card 100, as well as the extracted numbers extracted from the number information about the purchased commodities (registered commodities) and the information (receipt identification number) for identifying the receipt, may be converted to a barcode, and the barcode may be printed on the receipt. Further, not only the information (bingo card identification number) for identifying the bingo card 100, but also the information about a combination of numbers that form a bingo pattern may be printed on the barcode 101 of the bingo card 100.

As described above, upon completion of the payment settlement process after the sales operation, the sales clerk (cashier) who operates the POS device 10 or the POS device 10A issues the receipt linked to the bingo card 100, and then hands over the bingo card 100 and the commodities to the customer in the state in which the receipt and the bingo card 100 are linked to each other. As a result, the customer takes out the bingo card 100 representing the information (bingo card identification number) about the bingo card printed on the receipt handed to the customer, so that the customer can participate in the receipt bingo game by using a combination of the bingo card 100 and the information (specifically, extracted numbers that are extracted as a combination of numbers, which can be used for the bingo game, from the number information about the registered commodities) printed on the receipt.

In general, the bingo card 100 has a matrix of five rows and five columns of squares, i.e., 25 squares in total. The middle square is treated as a free spot in which it is assumed that a valid number is placed. Numbers to be selected from 1 to 75 are respectively placed in the remaining 24 squares. In this case, the numbers to be placed in the squares are divided into five sets of 15 numbers (1 to 15, 16 to 30, ...) in an ascending order of the numbers 1 to 75 and are sequentially allocated to each column in the vertical direction. In each column, the numbers which are appropriately selected from the 15 allocated numbers are respectively placed in the squares.

However, in the case of the receipt bingo game according to this exemplary embodiment in which a combination of the bingo card 100 and the number information about the registered commodities is used, 100 numbers from 00 to 99 are used as target numbers, instead of limiting the numbers for use as the number sequence 102 of the bingo card 100 to 1 to 75, so that the numbers are effective for all combinations of two numbers printed on the receipt as the number information about the registered commodities. Further, the numbers 00 to 99 are divided into five sets of 20 numbers (00 to 19, 20 to 39, ...) in an ascending order of the numbers and are sequentially allocated to each column in the vertical direction. In each column, the numbers which are appropriately selected from the 20 allocated numbers are respectively placed in the squares. Thus, the numbers can be set in such a manner that a bingo pattern can be formed by all combinations of two numbers printed on the receipt as the number information about the registered commodities.

In this case, if the bingo card 100 on which the number sequence 102 is printed is distributed to each customer before purchasing commodities, for example, when the customer comes into the store, instead of distributing the bingo card 100 to each customer as the receipt bingo game, which uses a combination of the bingo card 100 and the information about the registered commodities printed on the receipt, upon completion of the payment settlement process for the purchased commodities, the customer can purchase the commodities which should be purchased to win the bingo game, while looking at the numbers on the received bingo card 100, so that the customer can win the bingo game without fail. This is not desirable because the game properties are lost and an increase in the unit price per customer cannot be achieved.

Note that a number of bingo cards 100 corresponding to the purchase amount, for example, "one bingo card per purchase amount of 1,000 yen", may be linked to one receipt to be distributed to each customer. For example, if a customer pays 5,345 yen for a purchase and five bingo cards 100 are distributed to the customer, an instruction for the sales clerk (cashier) to read five bingo cards to be handed to the customer is displayed on the display of the display unit 13 of each of the POS devices 10 and 10A. At the time when the sales clerk (cashier) who has viewed the display completes the operation of reading the barcode 101 on each of the five bingo cards 100, which are randomly selected from the bingo cards prepared in advance in the cash register, the sales clerk (cashier) shifts to the "settlement" operation. In this case, when the entire sales operation, i.e., the payment settlement process, is completed, the information (bingo card identification number) for identifying each of the five bingo cards, as well as the extracted numbers, which are extracted as a combination of numbers used for the bingo game from the information about the registered commodities, and the information (receipt identification number) for identifying the receipt, are registered in the extracted number registration table 220 included in each of the POS devices 10 and 10A. In some cases, information identical to the information registered in the extracted number registration table 220 may be printed on the receipt as a character string, which can be read by the customer, or as a barcode obtained by converting the information so that the information can be read by a barcode reader.

The customer extracts a combination of two adjacent numbers (extracted numbers) as a combination of numbers used for the bingo game from various pieces of number information relating to, for example, the commodity code, the number of purchased commodities, and the purchase amount (unit price, total amount), which are printed on the received receipt as information about the registered commodities. If the extracted combination of two numbers (extracted numbers), or the combination of two numbers printed on the receipt as a character string representing the extracted numbers, is present in the squares of the bingo card 100, it can be determined that the numbers valid for the bingo game have been detected, so that the bingo game can be executed by opening or marking the squares in which the corresponding numbers are placed.

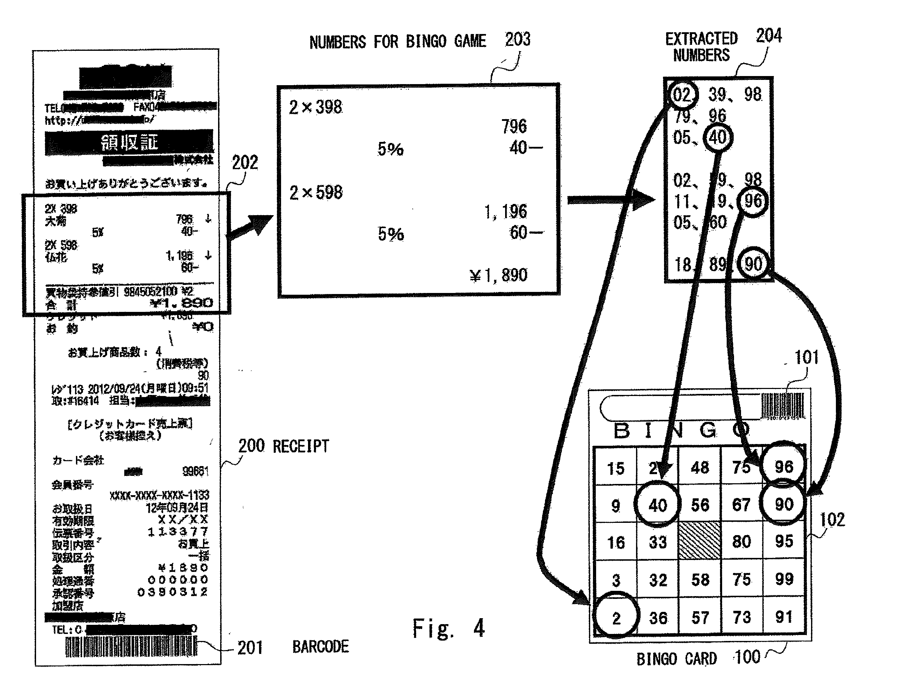

An example of the method for executing the bingo game printed on the receipt by using the receipt linked to the information about the bingo card will be further described with reference to the explanatory diagram of Fig. 4. Fig. 4 is an explanatory diagram for explaining an example of the execution method for executing the bingo game by using a combination of the bingo card 100 shown in Fig. 3 and the information about the registered commodities (purchased commodities) on the receipt, and illustrates an example of rules of the bingo game using the number information about the purchased commodities printed on the receipt linked to the information about the bingo card 100.

When the receipt bingo game is executed using a receipt 200, as shown in Fig. 4, the customer extracts only the number information as numbers 203 for the bingo game from purchased commodity information 202 representing the information about the purchased commodities printed on the received receipt 200. The purchased commodity information 202 on the receipt 200 includes various pieces of number information such as the commodity code representing the type of a purchased commodity, the number of the purchased commodities, the purchase amount, the discount rate or discount amount regarding each purchased commodity, and the total purchase amount. After that, the customer extracts a combination of two adjacent numbers as extracted numbers 204 used for the bingo game from the extracted numbers 203 for the bingo game. In the example shown in Fig. 4, 18 combinations of numbers "02, 39, 98, 79, 96, 05, 40, 02, 59, 98, 11, 19, 96, 05, 60, 18, 89, 90" are extracted as the extracted numbers 204.

After that, the customer checks if there are any valid numbers that match the numbers in the squares on the bingo card 100 by comparing each combination of two numbers extracted as the extracted numbers 204 from the purchased commodity information 202 on the receipt 200, with the numbers written in the squares as the number sequence 102 on the bingo card 100. In the example shown in Fig. 4, as indicated by circles, four numbers "02, 40, 90, 96" match the numbers in the squares as valid numbers, and thus the corresponding squares on the bingo card 100 are marked or opened. However, the bingo determination result obtained by comparing the extracted numbers 204 shown in Fig. 4 with the number sequence 102 on the bingo card 100 shows that no bingo is established because not all the numbers in the squares in any one of a vertical line, a horizontal line, and a diagonal line on the bingo card 100 are marked or opened as valid numbers.

On the other hand, as a result of executing such a bingo game, when all the numbers in the squares in any one of a vertical line, a horizontal line, and a diagonal line on the bingo card 100 are marked or opened as valid numbers, a bingo is obtained. Accordingly, the customer brings, to a service counter or the like, the bingo card 100 in which a bingo has occurred, or the receipt 200 linked to the bingo card 100, and shows it to the sales clerk (clerk in charge) at the service counter or the like.

The sales clerk (clerk in charge) at the service counter or the like causes the POS device 10 or the POS device 10A for bingo determination to read the barcode on the shown bingo card 100 or the barcode on the receipt 200, to thereby obtain the information (bingo card identification number) for identifying the bingo card 100, and causes the POS device 10 or the POS device 10A to retrieve data on the bingo establishment conditions representing each combination of numbers that form a bingo pattern on the bingo card 100 by referring to the bingo establishment condition registration table provided in advance. The retrieved bingo establishment conditions are displayed on the screen of the display unit 13. In the POS device 10 or the POS device 10A for bingo determination, the bingo establishment conditions representing each combination of numbers that form a bingo pattern on the bingo card 100 are registered in advance in the bingo establishment condition registration table in such a manner that the conditions are linked to the respective bingo cards. The sales clerk (clerk in charge) at the service counter or the like checks the contents printed on the receipt 200 brought by the customer, by referring to the data on the bingo establishment conditions displayed on the screen of the display unit 23, thereby confirming whether or not a bingo has occurred.

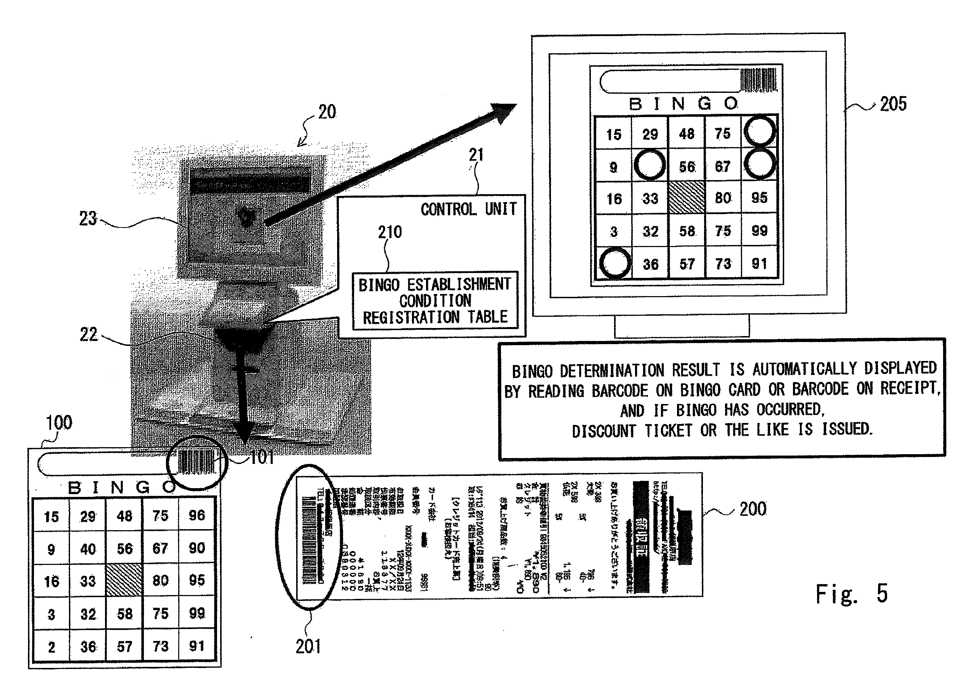

In another alternative, as shown in the sales promotion system in Fig. 2, when the bingo card automatic determination machine 20 having the function of automatically determining whether or not a bingo has occurred is installed at the service counter or the like, the sales clerk (clerk in charge) at the service counter or the like can automatically confirm whether or not a bingo has occurred, merely by causing the bingo card automatic determination machine 20 to read the shown bingo card 100 or receipt 200, instead of using the POS device 10 or the POS device 10A for bingo determination, without the need for the sales clerk (clerk in charge) at the service counter or the like to make a judgment, as described later with reference to Fig. 5. When the sales clerk (clerk in charge) at the service counter or the like confirms that a bingo has occurred, the sales clerk issues a coupon, a discount ticket, or the like to the customer, so that the customer can receive the privileges, such as a free gift, a discount ticket, or a coupon.

Fig. 5 is an explanatory diagram for explaining an example of the operation of the bingo card automatic determination machine 20 installed at the service counter or the like. The bingo card automatic determination machine 20 includes a bingo establishment condition registration table 210 in which data on bingo establishment conditions representing each combination of numbers that form a bingo pattern on each bingo card 100 is registered in advance for use in determining whether or not a bingo has occurred, as in the case of the POS devices 10 and 10A for bingo determination described above. The bingo card automatic determination machine 20 also has a function of automatically comparing the bingo establishment conditions with the extracted numbers 204 which are extracted from the number information about the purchased commodities on the receipt 200. As shown in Fig. 5, upon receiving one of the bingo card 100 and the receipt 200 linked to the bingo card 100 from the customer, the sales clerk (clerk in charge) at the service counter or the like sets the received bingo card 100 or receipt 200 in the input unit 22 (a barcode reading unit for bingo determination) of the bingo card automatic determination machine 20, and operates the input unit 22 to read one of the barcode 101 printed on the bingo card 100 and a barcode 201 printed on the receipt 200.

In this case, the information (bingo card identification number) for identifying the bingo card 100, as well as the information for identifying the POS device 10A which has executed the payment settlement process and has issued the bingo card 100 to the customer, may be printed on the barcode 101. Further, the information (receipt identification number) for identifying the receipt 200, as well as the information for identifying the POS device 10A which has executed the payment settlement process and has issued the receipt 200 to the customer, may be printed on the barcode 201. In the POS device 10A which executes the payment settlement process, as described above with reference to Fig. 3, the information (bingo card identification number) for identifying the bingo card 100, the information (receipt identification number) for identifying the receipt 200, and the data on the extracted numbers 204 extracted as a combination of numbers used for the bingo game from the information about the registered commodities are linked to each other and registered in the extracted number registration table 220.

The bingo card automatic determination machine 20 which has read one of the barcode 101 printed on the bingo card 100 and the barcode 201 printed on the receipt 200 transmits a transfer request for the receipt 200, which is linked to the bingo card 100 read through the input unit 22, or the extracted numbers 204 relating to the receipt 200, to the POS device 10A which executes the payment settlement process, via the communication unit 25, thereby obtaining the extracted numbers 204 relating to the receipt 200 registered in the extracted number registration table 220 of the POS device 10A which executes the payment settlement process. In another alternative, the bingo card automatic determination machine 20 which has read one of the barcode 101 printed on the bingo card 100 and the barcode 201 printed on the receipt 200 may transmit the barcode 101 or the barcode 201 to the POS device 10A which executes the payment settlement process, and the POS device 10A which executes the payment settlement process may transmit the extracted numbers 204 relating to the receipt 200 registered in the extracted number registration table 220 in which the transmitted barcode 101 or barcode 201 is registered. In this case, when there are a plurality of POS devices 10A, the barcode 101 or the barcode 201 is transmitted to all the POS devices 10A from the bingo card automatic determination machine 20, and the POS devices 10A including the extracted number registration table 220 in which the transmitted barcode 101 or barcode 201 is registered transmits the extracted numbers 204 relating to the receipt 200 registered in the extracted number registration table 220 in which the transmitted barcode 101 or barcode 201 is registered. After that, the bingo card automatic determination machine 20 extracts the data on the bingo establishment conditions for the bingo card 100 by referring to the bingo establishment condition registration table 210, sequentially compares the numbers written in the squares as the number sequence 102 on the bingo card 100 with the extracted numbers 204 transferred from the POS device 10A which executes the payment settlement process, and overwrites the numbers in the squares, which match the extracted numbers 204, with empty squares, for example, as valid numbers. The image of the bingo card 100 obtained after the numbers are overwritten is edited as a bingo card image 205, is sequentially displayed on the display unit 23 of the bingo card automatic determination machine 20, and is shown as the bingo determination result to the sales clerk (clerk in charge) at the service counter or the like.

In some cases, the bingo card automatic determination machine 20 may not include the bingo establishment condition registration table 210, and the bingo establishment conditions for the corresponding bingo card 100 and the extracted numbers 204 may be received via the communication unit 25 from the POS device 10A which has executed the payment settlement process and has issued the bingo card 100. If the information about the extracted numbers 204 used for determining whether or not a bingo has occurred is recorded in the barcode 201 on the receipt 200, it is also possible to immediately transit to the operation for checking whether or not a bingo has occurred, merely by reading the barcode 201, without the need to transfer the extracted numbers 204 from the POS device 10A, which executes the payment settlement process, via the communication unit 25, in the bingo card automatic determination machine 20. Also in the case of reading the bingo card 100, the extracted numbers 204 on the linked receipt 200 may be printed on the barcode 101 on the bingo card 100 so that the bingo determination process can be immediately carried out.

After completion of the comparison between all the extracted numbers 204 with the numbers in the squares of the bingo card 100, the bingo card automatic determination machine 20 automatically confirms whether or not all the squares in at least one row or one column in any of vertical, horizontal, and diagonal directions on the bingo card 100 are overwritten with, for example, empty squares, as valid numbers that match the extracted numbers 204, as a final bingo determination result. When all the squares in at least one row or one column in any of the vertical, horizontal, and diagonal directions are overwritten with empty squares, it is determined that a bingo has occurred.

In the case of the receipt 200 shown in the explanatory diagram of Fig. 4, as indicated by circles in the bingo card image 205 shown in Fig. 5, four squares are overwritten with empty squares as valid numbers, while all the squares in one row or one column in any of the vertical, horizontal, and diagonal directions are not overwritten with empty squares. Accordingly, the bingo card automatic determination machine 20 determines that no bingo is established, and notifies the sales clerk (clerk in charge) at the service counter or the like that no bingo is established. The sales clerk (clerk in charge) at the service counter or the like, who has received the notification, can confirm that no bingo is established, by viewing the final bingo card image 205 displayed on the display unit 23.

On the other hand, unlike the bingo card image 205 shown in Fig. 5, when all the squares in at least one row or one column in any of the vertical, horizontal, and diagonal directions on the bingo card 100 are overwritten with blank squares as a final bingo determination result, it is determined that a bingo has occurred, and the sales clerk (clerk in charge) at the service counter or the like is notified that a bingo has occurred. The sales clerk (clerk in charge) at the service counter or the like, who has received the notification, can confirm that a bingo has occurred, by viewing the final bingo card image 205 displayed on the display unit 23. The sales clerk (clerk in charge) at the service counter or the like, who has confirmed that a bingo has occurred, issues a discount ticket, a coupon, or the like to the customer who has brought the bingo card 100 in which a bingo has occurred, or the receipt 200.

In other words, the clerk in charge at the service center or the like, who has received the bingo card 100 or the receipt 200 from the customer, can obtain the result of automatically determining whether or not a bingo has occurred, based on the extracted numbers 204 extracted from the purchased commodity information 202 on the receipt 200 linked to the bingo card 100, merely by performing the operation for causing the input unit 22 of the bingo card automatic determination machine 20 to read one of the barcode 101 on the received bingo card 100 or the barcode 201 on the receipt 200. When the bingo card automatic determination machine 20 determines that a bingo has occurred, the bingo card automatic determination machine 20 not only notifies the sales clerk (clerk in charge) at the service counter or the like that a bingo has occurred, but also may automatically print and issue a discount ticket, a coupon, or the like to be handed to the customer according to the bingo establishment state, when the bingo card automatic determination machine 20 notifies the sales clerk (clerk in charge) at the service counter or the like that a bingo has occurred.

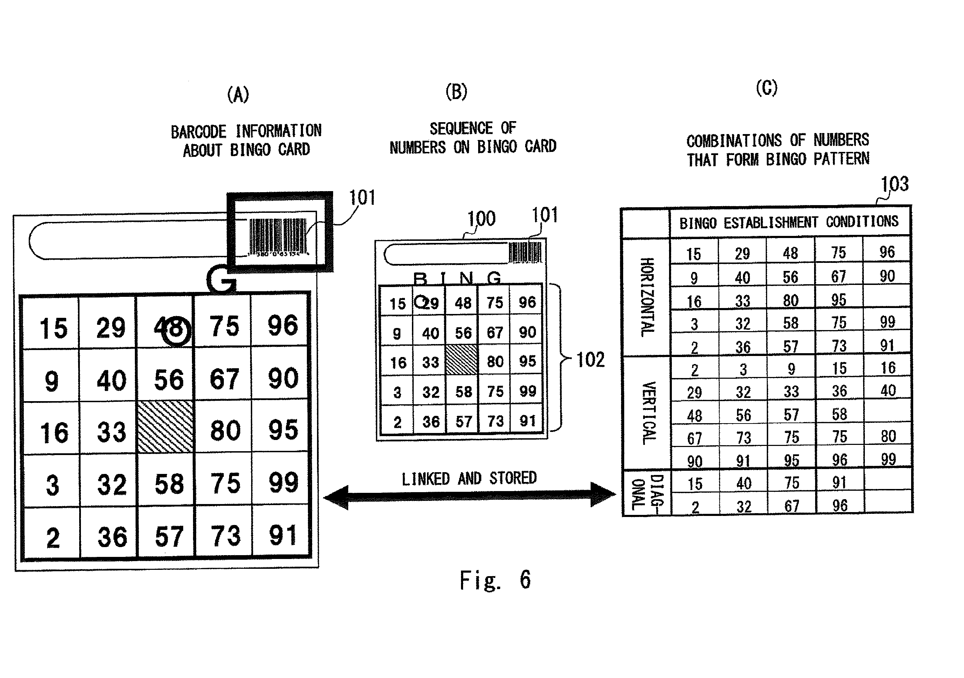

Next, the association between the information about the barcode 101 on the bingo card 100 and the combination of numbers that form a bingo pattern as described above with reference to the explanatory diagram of Fig. 3 will be described in more detail with reference to the explanatory diagrams of Figs. 6. Figs. 6 are explanatory diagrams for explaining an example of the association between the information about the barcode 101 on the bingo card 100 and the combination of numbers that form a bingo pattern as shown in Fig. 3. Fig. 6(A) illustrates barcode information on the bingo card 100 in which the barcode 101 representing the information (bingo card identification number) for identifying the bingo card 100 is enlarged and highlighted. Fig. 6(B) illustrates the number sequence 102 in the squares printed on the bingo card 100. Fig. 6(C) illustrates combinations of numbers that form a bingo pattern in the bingo card 100 as bingo establishment conditions 103.

As for the number sequence 102 on the bingo card 100 shown in Fig. 6(B), the bingo establishment conditions 103 shown in Fig. 6(C) indicate that the conditions for forming a bingo pattern are satisfied when all the numbers in the squares in any one of the directions, among the combinations of numbers written in the squares in the rows in the horizontal direction, in the columns in the vertical direction, and in the diagonal lines in the diagonal direction, match the extracted numbers 204 on the receipt 200. Specifically, in the case of Fig. 6(B), the conditions for forming a bingo pattern are satisfied in one of the following cases: the case where all combinations of numbers in any one of the rows from the first row "15, 29, 48, 75, 96" to the fifth row "2, 36, 57, 73, 91" in the horizontal direction are matched; the case where all combinations of numbers in any one of the columns from the first column "2, 3, 9, 15, 16" to the fifth column "90, 91, 95, 96, 99" in the vertical direction are matched; and the case where all combinations of numbers in one of the diagonal lines, i.e., the line "15, 40, 75, 91" in the diagonally downward direction and the line "2, 32, 67, 96" in the diagonally upward direction, are matched.

The bingo establishment conditions 103 shown in Fig. 6(C) are registered and stored in the bingo establishment condition registration table 210 in the bingo card automatic determination machine 20 in such a manner that the bingo establishment conditions 103 are linked to the information about the barcode 101 representing the information (bingo card identification number) for identifying the bingo card 100 shown in Fig. 6(A). This enables the bingo card automatic determination machine 20 to automatically determine whether or not a bingo has occurred, by using the result of extracting the number information included in the purchased commodity information about the commodities purchased by the customer. While the above exemplary embodiment illustrates the case where the device that automatically determines whether or not a bingo has occurred is installed at the service center or the like as the bingo card automatic determination machine 20 separately from the POS devices 10 and 10A. However, as described above, the present invention is not limited to this case. For example, each of the POS devices 10 and 10A may be provided with the bingo establishment condition registration table 210, and the bingo establishment conditions 103 shown in Fig. 6(C) may be registered and stored in the bingo establishment condition registration table 210 in such a manner that the bingo establishment conditions 103 are linked to the barcode 101 representing the information (bingo card identification number) for identifying the bingo card 100 shown in Fig. 6(A), so that the POS devices 10 and 10A can automatically determine whether or not a bingo has occurred, by using the result of extracting the number information included in the purchased commodity information 202 about the commodities purchased by the customer. In this case, if a bingo has occurred, a discount process for discounting the amount may be performed during the adjustment process and the information about the discount process may also be printed on the receipt.

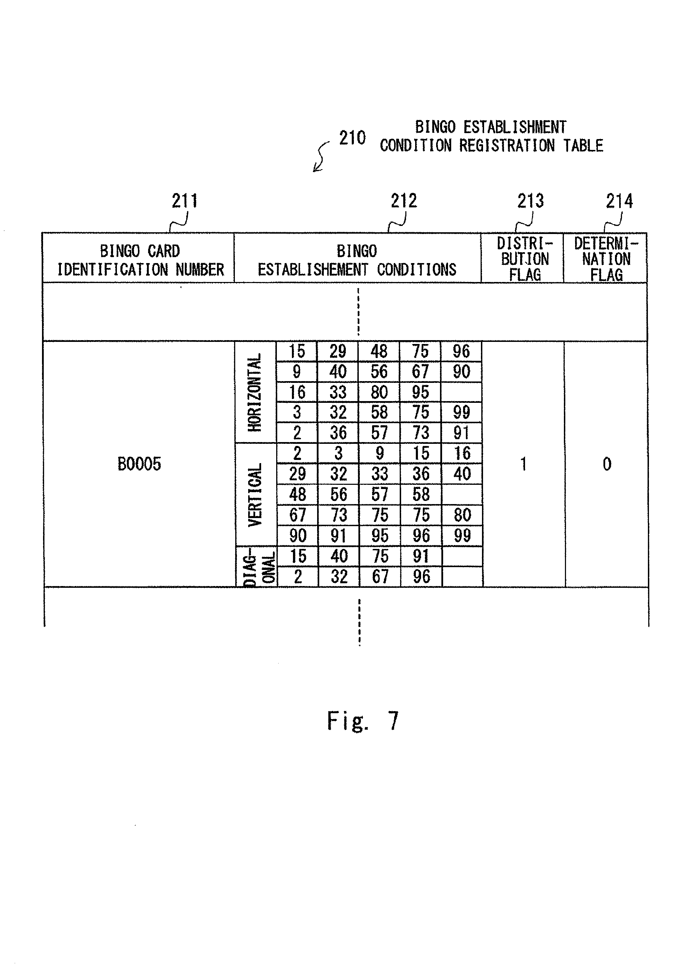

Fig. 7 is a table showing an example of the bingo establishment condition registration table 210 which is included in the bingo card automatic determination machine 20 or the POS devices 10 and 10A. As shown in Fig. 7, the bingo establishment condition registration table 210 is configured by linking the items of a bingo card identification number 211, the bingo establishment conditions 103, a distribution flag 213, and a determination flag 214. In the field of the bingo card identification number 211, the number information printed on the barcode of the bingo card 100 is registered as the information (bingo card identification number) for identifying the bingo card 100 as shown in Fig. 6(A).

In the field of the bingo establishment conditions 212, all combinations of numbers that form a bingo pattern in the bingo card 100 corresponding to the bingo card identification number included in the bingo card identification number 211 as shown in Fig. 6(C) are registered. In the field of the distribution flag 213, the value "0" representing that the bingo card 100 has not been distributed is set before the bingo card 100 corresponding to the bingo card identification number included in the bingo card identification number 211 is distributed to the customer, and the value "0" is overwritten with the value "1" so as to enable the bingo determination operation for the bingo card 100 after the bingo card is distributed to the customer. In the field of the determination flag 214, the value "0" representing that the bingo determination operation has not been executed is set before the bingo determination operation is executed, and after the bingo determination operation is executed, the value "0" is overwritten with the value "1" representing that the operation has been executed.

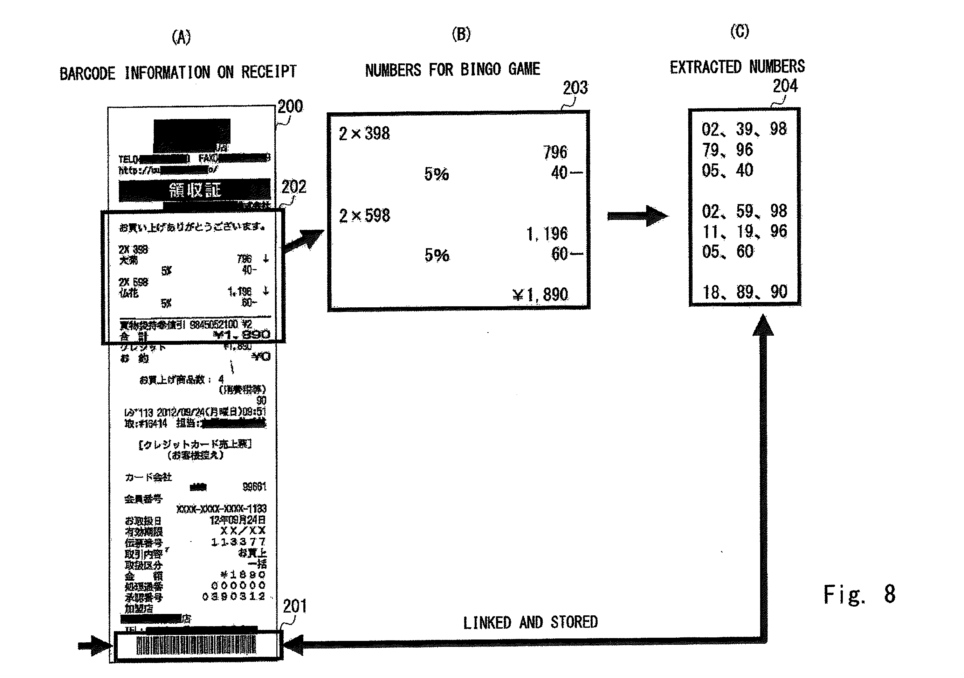

Next, the association between the information about the barcode 201 on the receipt 200 and the combination of numbers extracted as the extracted numbers 204 from the receipt 200 for the bingo game as described above with reference to the explanatory diagram of Fig. 4 will be described in more detail with reference to the explanatory diagrams of Figs. 8. Figs. 8 are explanatory diagrams for explaining an example of the association between the information (receipt identification number) about the barcode 201 on the receipt 200 and the combination of numbers extracted as the extracted numbers 204 from the receipt 200 for the bingo game as shown in Fig. 4. Fig. 8(A) illustrates information about the receipt 200 which includes the purchased commodity information 202 and on which the information about the purchased commodities and the barcode 201 including at least the information (receipt identification number) for identifying the receipt 200 are printed. Fig. 8(B) illustrates the numbers 203 for the bingo game obtained as a result of extracting a number string for the bingo game from the purchased commodity information 202 printed on the receipt 200. Fig. 8(C) illustrates the extracted numbers 204 obtained by extracting a combination of two adjacent numbers from the numbers 203 for the bingo game shown in Fig. 8(B) as a combination of numbers used for the bingo game.

As described above with reference to Fig. 4, in the POS devices 10 and 10A, when the sales operation, or the payment settlement process, is carried out, each number string included in the purchase commodity information 202 printed on the receipt 200 shown in Fig. 8(A) is extracted as the numbers 203 for the bingo game shown in Fig. 8(B). Further, combinations of numbers that can be used for the bingo game are extracted as the extracted numbers 204 shown in Fig. 8(C) from the extracted numbers 203 for the bingo game. After that, the extracted numbers 204 shown in Fig. 8(C) are registered in the extracted number registration table 220, which is included in the POS devices 10 and 10A that have executed the payment settlement process for the customer, in such a manner that the extracted numbers 204 are linked to the information (receipt identification number) for identifying the receipt 200 included in the barcode 201 shown in Fig. 8(A) and are also linked to the information (bingo card identification number) for identifying the bingo card 100 to be linked to the receipt 200.

After that, in the case of confirming whether or not a bingo has occurred, the extracted numbers 204 registered in the extracted number registration table 220 are automatically compared with the numbers (i.e., combination of numbers defined as the bingo establishment conditions 103) registered in the field of the bingo establishment conditions 212 in the bingo establishment condition registration table 210 shown in Fig. 7, thereby making it possible to confirm whether or not a bingo has occurred. In this case, when the POS device 10A for determining whether or not a bingo has occurred in the combination of the receipt 200 and the bingo card 100 is different from the POS device 10A which has executed the payment settlement process and has issued both the receipt 200 and the bingo card 100, the POS device 10A for determining whether or not a bingo has occurred does not include the extracted number registration table 220 in which the information about the receipt 200 and the bingo card 100 is registered. Accordingly, a transfer request may be transmitted to the POS device 10A, which executes the payment settlement process, via the communication unit 15, to transfer the extracted numbers 204 relating to the receipt 200. Also in the case where whether or not a bingo has occurred is determined in the bingo card automatic determination machine 20 which is exclusively used for determining whether or not a bingo has occurred, the extracted numbers 204 relating to the receipt 200 are transferred from the POS device 10A, which executes the payment settlement process, via the communication unit 25.

As described above, the information (receipt identification number) for identifying the receipt 200, the extracted numbers 204, and the information (bingo card identification number) for identifying the bingo card 100 may be linked to each other and printed on the barcode 201 of the receipt 200. In such a case, whether or not a bingo has occurred can be immediately determined merely by reading the barcode 201 on the receipt 200, without the need to transmit the transfer request to the POS device 10A which executes the payment settlement process, even when the bingo card automatic determination machine 20 determines whether or not a bingo has occurred, or even when the POS devices 10 and 10A for determining whether or not a bingo has occurred are different from the POS device 10A which executes the payment settlement process.

As described above, when the payment settlement process is executed, the extracted numbers 204 may be printed on the receipt 200 as a character string. In this manner, the extracted numbers 204 are printed on the receipt 200 as a combination of numbers used for the bingo game, thereby allowing the customer to participate in the bingo game and easily recognize whether or not a bingo has occurred. Moreover, when the customer who has recognized that a bingo has occurred shows the bingo card 100 or the receipt 200 to the sales clerk (clerk in charge), the sales clerk (clerk in charge) can easily confirm that a bingo has occurred, without much time and effort.

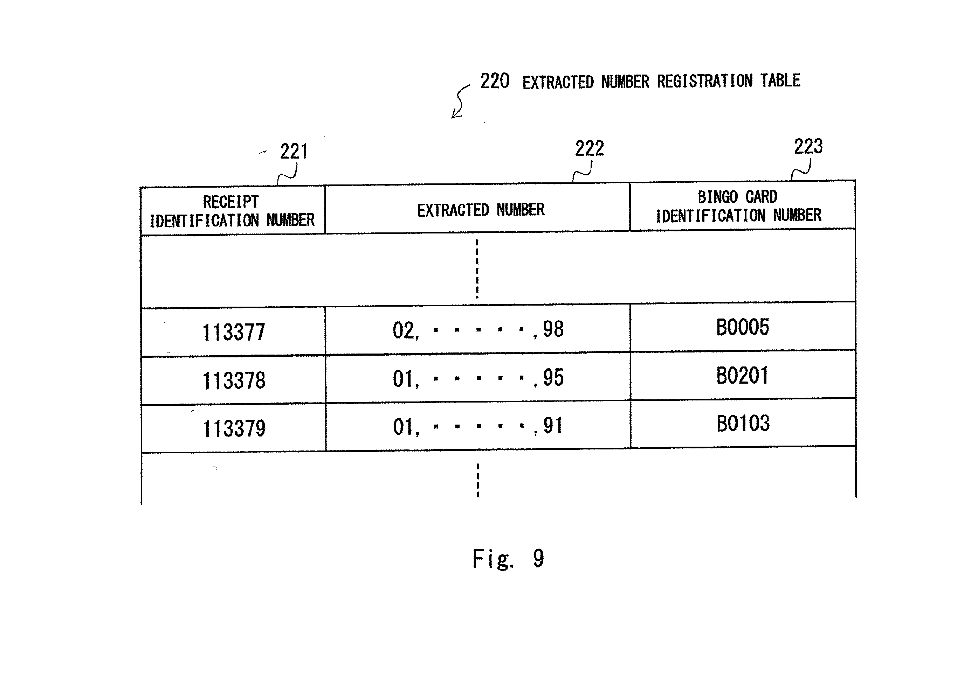

Fig. 9 is a table showing an example of the extracted number registration table 220 included in the POS devices 10 and 10A. As shown in Fig. 9, the extracted number registration table 220 is configured by linking the items of a receipt identification number 221, an extracted number 222, and a bingo card identification number 223. In the field of the receipt identification number 221, the number information printed on the barcode 201 of the receipt 200 is registered as the information (receipt identification number) for identifying the receipt 200 as shown in Fig. 8(A). In the field of the extracted number 222, the number information about the extracted numbers 204 extracted as a combination of two adjacent numbers from the numbers 203 for the bingo game as shown in Fig. 8(C) is registered. In the field of the bingo card identification number 223, the number information printed on the barcode 101 of the bingo card 100 is registered as the information (bingo card identification number) for identifying the bingo card 100 linked to the receipt 200.

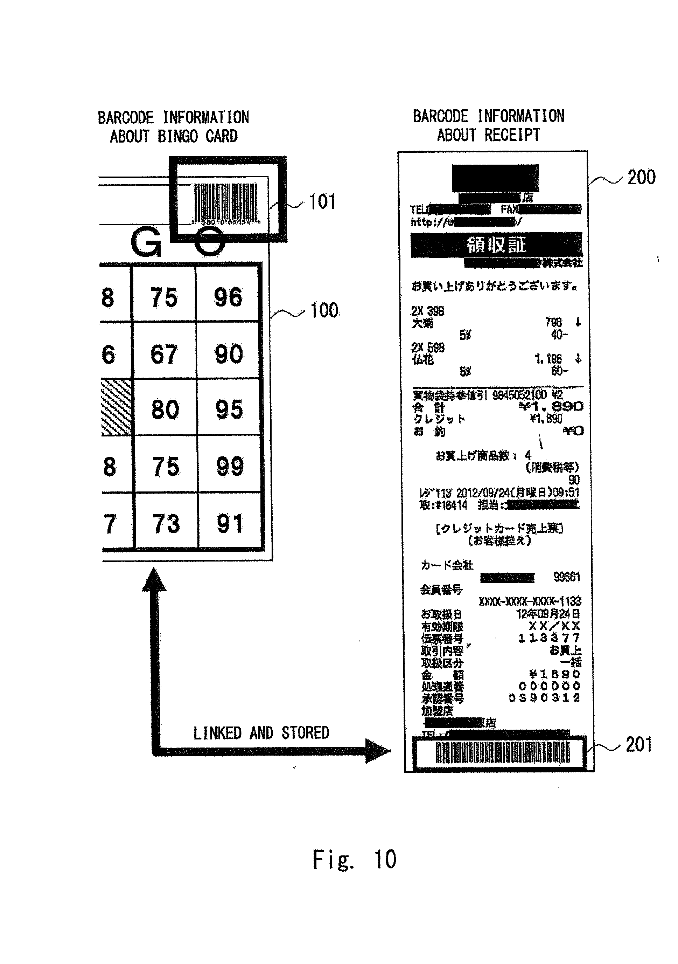

Next, the operation in which the bingo card 100 and the receipt 200 are linked to each other when the payment settlement process is carried out after the commodity registration will be described in more detail with reference to the explanatory diagrams of Fig. 10. Fig. 10 are explanatory diagrams for explaining an example of the association between the bingo card 100 and the receipt 200. Left part of Fig. 10 is an enlarged view showing the barcode 101 on the bingo card 100 including at least the information (bingo card identification number) for identifying the bingo card 100. Right part of Fig. 10 illustrates the barcode 201 on the receipt 200 including at least the information (receipt identification number) for identifying the receipt 200.

As described above with reference to the explanatory diagram of Fig. 3, when the POS devices 10 and 10A carry out the payment settlement process after the commodity registration, the POS devices 10 and 10A read the barcode 101 on the bingo card 100 to be handed to the customer together with the commodities and the receipt 200, so that the information (receipt number) for identifying the receipt 200 and the information (bingo card identification number) for identifying the bingo card 100 are linked to each other and stored in the extracted number registration table 220 included in the POS devices 10 and 10A as shown in Fig. 9. Accordingly, when the bingo establishment condition registration table 210 as shown in Fig. 7 is provided in advance in the POS devices 10 and 10A, which have executed the payment settlement process, for determining whether or not a bingo has occurred, it is possible to immediately determine whether or not a bingo has occurred, by using the pieces of information linked together and stored in the POS devices 10 and 10A, as shown in Fig. 10, merely by reading the barcode on one of the bingo card 100 and the receipt 200.

Even in the case where the bingo establishment condition registration table 210 is not preliminarily provided in the POS devices 10 and 10A that have executed the payment settlement process, when the POS device 10A including the communication unit 15 is used, whether or not a bingo has occurred can be determined by causing the bingo card automatic determination machine 20 or the POS device 10A, in which the bingo establishment condition registration table 210 as shown in Fig. 7 is provided in advance, to automatically transfer the information about the bingo establishment conditions 103 via a communication line.

Also in the bingo card automatic determination machine 20 shown in Fig. 5, as described above, in the case of determining whether or not a bingo has occurred by reading the barcode on one of the bingo card 100 and the receipt 200, the POS device 10A which executes the payment settlement process, i.e., the POS device 10A which has issued the bingo card 100 or the receipt 200, is caused to automatically transfer the information about the extracted numbers 204 and the information about the association between the bingo card 100 and the receipt 200 via a communication line, thereby making it possible to determine whether or not a bingo has occurred.

As described above, the information about the association between the bingo card 100 and the receipt 200 may be recorded in the barcode 201 on the receipt 200.

As described above, in this exemplary embodiment, in the case of performing the sales operation, or the payment settlement process, in the POS device 10 shown in Fig. 1 or the POS device 10A shown in Fig. 2, the POS device 10 and the POS device 10A read not only the barcode attached to each purchased commodity, but also the barcode 101 (including at least the information (bingo card identification number) for identifying the bingo card 100) on the bingo card 100 which is randomly selected and picked up from among the plurality of bingo cards prepared in advance in the cash register so that the sales clerk hands over the bingo card 100 to the customer.

Further, when the payment settlement process is carried out, the number information (commodity code, the number of purchased commodities, purchase unit price, total amount, discount rate, discount amount, etc.) about the purchased commodities is extracted from the purchased commodity information 202 printed on the receipt 200 as the numbers 203 for the bingo game which are used for the bingo game, and a combination of two adjacent numbers is extracted from the extracted numbers 203 for the bingo game as the extracted numbers 204 to be compared with the numbers on the bingo card 10. The extract numbers 204, the information (receipt identification number) for identifying the receipt 200, and the information (bingo card identification number) for identifying the bingo card 100 to be handed to the customer are linked to each other and registered in the extracted number registration table 220, as shown in Fig. 9, which is included in the POS device 10 shown in Fig. 1 or the POS device 10A shown in Fig. 2.

The bingo establishment condition registration table 210 as shown in Fig. 7, in which combinations of numbers that form a bingo pattern in each bingo card 100 to be handed to customers are registered as bingo establishment conditions, is created in advance and provided in the POS device 10 shown in Fig. 1 or the POS device 10 A shown in Fig. 2. It is also possible to provide an automatic determination function for automatically determining whether or not a bingo has occurred, by referring to the information registered in each of the extracted number registration table 220 and the bingo establishment condition registration table 210, based on the information about one of the bingo card 100 and the receipt 200. Further, as shown in Fig. 5, the dedicated bingo card automatic determination machine 20 having the automatic determination function for determining whether or not a bingo has occurred can be installed at the service center or the like.

Accordingly, when the customer who purchased commodities have enjoyed the bingo game using the obtained bingo card 100 and have won the bingo game, the customer shows one of the bingo card 100 in which a bingo has occurred, and the corresponding receipt 200, to the sales clerk so that the sales clerk can easily confirm whether or not a bingo has occurred, by referring to the information registered in each of the extracted number registration table 220 and the bingo establishment condition registration table 210 included in the POS device 10 or the POS device 10A. Upon confirming that a bingo has occurred, the sales clerk can give the privileges, such as a free gift, a discount ticker, or a coupon, to the customer. Instead of presenting one of the bingo card 100 and the receipt 200 to the sales clerk, both the bingo card 100 and the receipt 200 may be shown to the sales clerk.

If the customer who purchased commodities does not have enough time to enjoy the bingo game, whether or not a bingo has occurred can be automatically determined by using the information registered in each of the extracted number registration table 220 and the bingo establishment condition registration table 210 included in the POS device 10 or the POS device 10A, merely by presenting one of the bingo card 100 and the receipt 200 to the sales clerk, without the need for the customer to perform the bingo game. As a result, the determination result indicating whether or not a bingo has occurred can be immediately obtained, and when a bingo has occurred, the customer can receive the privileges such as a free gift, a discount ticket, or a coupon.

In the case of using a single POS device 10 in which the communication unit shown in Fig. 1 is not provided, the POS device 10 that automatically determines or confirms whether or not a bingo has occurred on the bingo card 100 is limited to the POS device 10 which has distributed the bingo card 100, that is, the POS device 10 which executes the payment settlement process for the commodities. However, in the case of the POS device 10A shown in Fig. 2, any POS device 10A may be used.

In a case where whether or not a bingo has occurred is confirmed or automatically determined in the POS devices 10A other than the POS device 10A which executes the payment settlement process for the purchased commodities, or in the bingo card automatic determination machine 20, whether or not a bingo has occurred can be determined by causing the POS device 10A, which has executed the payment settlement process and has issued the target bingo card 100 and the receipt 200, to transfer the data on the extracted numbers 204, which are extracted from the receipt 200, via the communication unit 15 or the communication unit 25.

For such a case, the extracted number registration table 220 may be provided in a specific POS device 10A or the bingo card automatic determination machine 20 in a centralized manner, instead of providing the extracted number registration table 220 in each POS device 10A, which executes the payment settlement process, in a distributed manner. During the payment settlement process of each POS device 10A which executes the payment settlement process, the information about the extracted numbers 204, the information (receipt identification number) for identifying the receipt 100, and the information (bingo card identification number) for identifying the bingo card 100 may be transferred to the specific POS device 10A or the bingo card automatic determination machine 20.

With the configuration in which the extracted number registration table 220 is provided in a centralized manner as described above, in the case where the POS device 10A for bingo determination or the bingo card automatic determination machine 20 confirms or automatically determines whether or not a bingo has occurred, if the POS device 10A or the bingo card automatic determination machine 20 does not include the extracted number registration table 220, it is only necessary to transmit a transfer request for the information about the extracted numbers 204, the information (receipt identification number) for identifying the receipt 200, and the information (bingo card identification number) for identifying the bingo card 100 to a specific POS device 10A which holds the extracted number registration table 220, or the bingo card automatic determination machine 20, via the communication unit 15 or the communication unit 25. In this case, the transmission counterpart of the transfer request is fixed to a specific POS device 10A or the bingo card automatic determination machine 20, which eliminates the need for printing information capable of discriminating the POS device 10A, which has executed the payment settlement process and has issued the receipt 200, on the barcode of the receipt 200. If the POS device 10A for bingo determination or the bingo card automatic determination machine 20 holds the extracted number registration table 220, it is not necessary to perform the operation for transmitting the transfer request via the communication unit 15 or the communication unit 25, as a matter of course.

Furthermore, in a case where whether or not a bingo has occurred is confirmed or automatically determined in the POS devices 10A other than the POS device 10A which executes the payment settlement process for the purchased commodities, or in the bingo card automatic determination machine 20, the extracted numbers 204, the information (receipt identification number) for identifying the receipt 200, and the information (bingo card identification number) for identifying the bingo card 100 may be linked to each other and printed on the barcode 201 on the receipt 200 during the payment settlement process of the POS device 10A which executes the payment settlement process, so that whether or not a bingo has occurred can be determined in any case, without the need for performing the transfer operation from the POS device 10A, which executes the payment settlement process, or a specific POS device 10A holding the extracted number registration table 220, via the communication unit 15 or the communication unit 25. In some cases, the extracted numbers 204, the information (receipt identification number) for identifying the receipt 200, and the information (bingo card identification number) for identifying the bingo card 100 may be linked to each other and printed on the barcode 101 of the bingo card.

To enable customers to easily perform the bingo game by using the information about the receipt 200, the information (receipt identification number) for identifying the receipt 200 and the information (bingo card identification number) for identifying the receipt 200, or the extracted numbers 204, the information (receipt identification number) for identifying the receipt 200, and the information (bingo card identification number) for identifying the bingo card 100 may be printed on the receipt 200 as a character string that can be easily read by the customers.

The above exemplary embodiment illustrates the case where after the execution of the payment settlement process for the purchased commodities, one or more bingo cards 100 are handed to the customer who has brought one receipt 200, and whether or not a bingo has occurred is determined by comparing the extracted numbers 204 extracted from the one receipt 200 with the number sequence 102 of one or more bingo cards 100. However, the present invention is not limited to this case. For example, a plurality of receipts 200 which are linked to one bingo card 100 may be handed to the customer, and whether or not a bingo has occurred may be determined by comparing the extracted numbers 204, which are extracted from the plurality of receipts 200, with the number sequence 102 of one bingo card 100. Further, a plurality of receipts 200 which are respectively linked to a plurality of bingo cards 100 may be handed to the customer, and whether or not a bingo has occurred may be determined by comparing the extracted numbers 204, which are extracted from the plurality of receipts 200, with the number sequence 102 of each of the plurality of bingo cards 100. Furthermore, bingo determination results obtained by comparing the extracted numbers 204, which are included in one receipt 200, with the numbers in the squares of one bingo card 100 may be added up for each square of the plurality of bingo cards, and whether or not a bingo has occurred may be determined by using the addition result.

As a method for distributing the bingo card 100 to each customer, the above exemplary embodiment illustrates the case where when the POS devices 10 and 10A at the cash register carry out the payment settlement process for the purchased commodities, the sales clerk randomly selects and picks out a bingo card from among one or more bingo cards 100, which are prepared in advance in the cash register, and causes the POS devices 10 and 10A to read the barcode 101 on the picked bingo card 100, to link the barcode information to the receipt 200, and then hands over the bingo card to the customer together with the commodities and the receipt 200. However, the present invention is not limited to this case.

For example, although not shown in Figs. 1 and 2, the POS devices 10 and 10A may be configured to be connected to an indicator for customers, on which the customers can view information. At the start of the payment settlement process for purchased commodities, images of one or more bingo cards 100, which are prepared in advance in the cash register, may be sequentially displayed on the screen of the indicator for customers at short time intervals (for example, at intervals of about one to two seconds), and the sales clerk may pick up the bingo card 100 selected by the customer while viewing the images of the bingo cards 100 displayed on the screen of the indicator for customers, and causes the POS devices 10 and 10A to read the barcode 101 on the picked bingo card 100 to link the barcode information to the receipt 200, and then hands over the bingo card to the customer together with the commodities and the receipt 200.

In another alternative, instead of preparing the bingo cards 100 in advance in the cash register, images for printing one or more bingo cards 100 may be stored in the POS devices 10 and 10A, and a card printer for printing bingo cards may be connected to the POS devices 10 and 10A. The bingo card 100 selected by the customer from among the images of the bingo cards 100 displayed on the screen of the indicator for customers may be printed and output by the card printer. Note that only the bingo card identification numbers for identifying one or more bingo cards 100, respectively, may be stored in the POS devices 10 and 10A, and the images for printing the bingo cards 100 may be stored in the card printer in such a manner that the images are respectively linked to the bingo card identification numbers.

Further, in the configuration in which the card printer for printing bingo cards is connected to the POS devices 10 and 10A, instead of selecting the bingo card 100 by the customer, the images for printing of one or more bingo cards 100 may be stored in the POS devices 10 and 10A, and when the payment settlement process for the customer is started, or when the payment settlement process for the previous customer is completed, the image for printing the bingo card 100 randomly selected from among the images for printing of one or more bingo cards 100 by using random numbers or the like may be printed and output by the card printer.

As described above, in the case where the bingo card 100 is printed during the payment settlement process for the customer, when it is determined whether or not a bingo has occurred, the information (receipt identification number) for identifying the receipt 200, or the extracted numbers 204 in some cases, may also be printed on the barcode 101 of the bingo card 100 in such a manner that the information or the extracted numbers are linked to the information (bingo card identification number) for identifying the bingo card 100, in case the customer shows the bingo card 100 instead of the receipt 200.

Furthermore, a "START" button and a "STOP" button, which are used for customers to operate the POS devices 10 and 10A, may be connected to the POS devices 10 and 10A. At the start of the payment settlement process for the commodities purchased by the customer, the customer may press the "START" button to thereby start the operation for randomly selecting any of the one or more bingo cards 100, and then the bingo card 100 selected when the "STOP" button is pressed may be printed and output by the card printer.

In this exemplary embodiment, instead of pressing the "settlement" key of the POS devices 10 and 10A, the settlement operation is started by performing the operation of reading the barcode 101 on the bingo card 100, to thereby start the payment settlement process for the purchased commodities. However, the present invention is not limited to this case. For example, before starting the registration of the commodities purchased by the customer, or after completion of the commodity registration, the operation of reading the barcode 101 on the bingo card 100 may be performed, and after that, the settlement operation may be started by pressing the "settlement" key.

This exemplary embodiment illustrates the case where the bingo card 100 and the receipt 200 are printed on separate pieces of paper. However, the images of the bingo cards 100 and the bingo card identification numbers may be registered in advance in the POS devices 10 and 10A in such a manner that the images and the bingo card identification numbers are linked together. Any one of the bingo cards 100 may be randomly selected, and the receipt 200 and the image of the bingo card 100 may be printed on the same paper before or after the registration of purchased commodities, or after completion of the payment settlement process. In such a case, since the bingo card reading operation is not carried out, the payment settlement operation is started by pressing the "settlement" key.

For example, the image information about the bingo card 100 may be printed at a lowermost position of the receipt 200. Specifically, when the payment settlement process is carried out and the receipt 200 is issued, the image of the bingo card 100 randomly selected is printed at the lowermost position of the receipt 200, and a receipt 200A with a bingo card is handed to the customer together with the purchased commodities. The customer can enjoy the bingo game by comparing the extracted numbers, which are extracted from the number information included in the purchased commodity information printed on one receipt 200A with a bingo card, with the sequence of numbers on the bingo card which is printed at the lower position of the receipt 200A with a bingo card.

However, when the bingo game is performed using one receipt 200A with a bingo card in this manner, the customers may feel a sense of distrust that the store can cause the POS devices 10 and 10A to intentionally select and print the image of the bingo card in which no bingo is established according to the number information included in the purchased commodity information, so that the customers may lose their enthusiasm for participating in the bingo game. For this reason, whether or not a bingo has occurred may be determined based not only on the bingo game result of one receipt 200A with a bingo game, but also on the result obtained by summing up the bingo game results of the plurality of receipts 200A with a bingo card.

As a result, when there is only one receipt 200A with a bingo card, even if no bingo is established because the valid numbers are not placed in all the squares in one row or one column in any of the vertical, horizontal, and diagonal direction, the possibility that the valid numbers are placed in all the squares in at least one row or one column in any of the vertical, horizontal, and diagonal directions is increased as a result of summing up the bingo game results of the plurality of receipts 200A with a bingo card. This leads to an increase in the customers' enthusiasm for participating in the bingo game. As a method for summing up the bingo game results, a method is employed in which the bingo game results are graphically summed up by focusing on the position of each square on the bingo card; it is checked if there is a valid number for each square on the bingo card of each of the plurality of receipts 200A with a bingo card; and when there is a valid number for a square on the bingo card of any of the receipts 200A with a bingo card, it is determined that there is a valid number for the square.

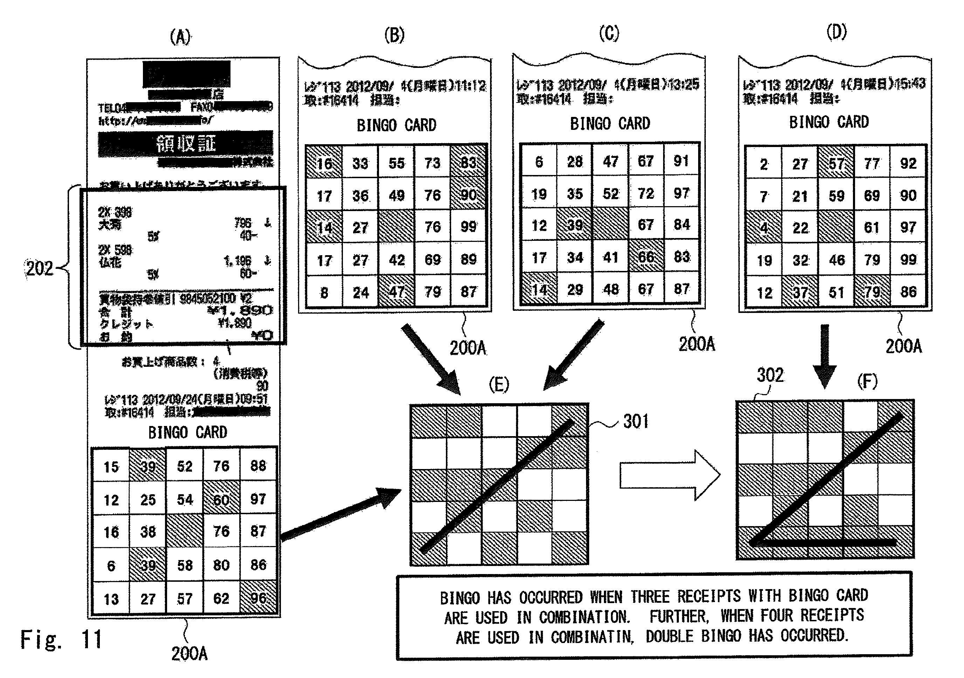

Figs. 11 are explanatory diagrams for explaining a state in which a bingo has occurred when a bingo game is performed using a plurality of receipts 200A with a bingo card. Figs. 11(A), 11(B), 11(C), and 11(D) respectively illustrate the bingo game results of first, second, third, and fourth receipts 200A with a bingo card. Fig. 11(E) illustrates the result obtained by adding up the bingo game results of the first to third receipts 200A with a bingo card. Fig. 11(F) illustrates the result obtained by adding up the bingo game results of the three receipts 200A with a bingo card shown in Fig. 11(E) and the bingo game result of the fourth receipt 200A with a bingo card. Note that shaded squares in each of the bingo cards shown in Figs. 11(A) to 11(F) represent squares for which there is a valid number.

As indicated by the shaded squares in each of the bingo cards shown in Figs. 11(A), 11(B), 11(C), and 11(D), in each receipt 200A with a bingo card, a sequence of valid numbers is not placed in all the squares in one row or one column in any of the vertical, horizontal, and diagonal directions, and thus no bingo is established. However, as shown in an addition result 301 in Fig. 11(E), as a result of summing up the bingo game results of the first to third receipts 200A with a bingo card, a sequence of valid numbers is placed in the squares in the diagonally upward direction, so that a bingo has occurred.

Further, when the customer continued shopping and received the fourth receipt 200A with a bingo card as shown in Fig. 11(D), the bingo game result of the fourth receipt 200A with a bingo card can be added to the addition result 301 shown in Fig. 11(E). As indicated by the addition result 302 shown in Fig. 11(F), the result of adding up the bingo game results of the first to fourth receipts 200A with a bingo card indicates a state in which a sequence of valid numbers is placed not only in the squares in the diagonally upward direction, but also in the squares in the horizontal direction at the lowermost row, so that a double bingo has occurred. In the case of summing up the bingo game results of the plurality of receipts 200A with a bingo card, more bingo patterns can be formed by changing the combination of the plurality of receipts 200A with a bingo card.

This configuration leads to an increase in the customers' willingness to purchase commodities and an increase in the customers' enthusiasm for participating in the bingo game. There is no need to particularly limit the number of receipts 200A with a bingo card, the bingo game results of which can be summed up. However, the period for issuance of the receipts 200A with a bingo card, the bingo card results of which can be summed up, is not limitless, but is preferably limited to a predetermined period (for example, one day or one week). While Fig. 11 illustrates an example in which the bingo game results are summed up by using a plurality of receipts 200A with a bingo card on which the image of a bingo game is printed, the bingo game results can also be summed up by using a plurality of bingo cards 100 which are prepared separately from the receipt 200.

In the case of the bingo game format using a plurality of receipts 200A with a bingo card as shown in Figs. 11 or bingo cards 100, the game properties are enhanced and the customers' willingness to participate in the game is increased. However, it is difficult for stores, such as convenience stores, which have a large number of customers at first glance, to effectively carry out the bingo game using a plurality of receipts 200A with a bingo card or bingo cards 100. This is because the customers are less likely to receive a plurality of receipts 200A with a bingo card or bingo cards 100.

Even when the bingo game is performed using only one receipt 200A with a bingo card, in the case of the format in which the bingo game is printed at the lowermost position of the receipt 200A with a bingo card as shown in Fig. 11(A), for example, the image information about the bingo card is printed after completion of the execution of the commodity registration in the POS devices 10 and 10A, the execution of the payment settlement process for the registered purchased commodities, and printing of the purchased commodity information 202 on the receipt 200A with a bingo card, as described above. As a result, the customers may feel a sense of distrust that the store has intentionally selected the numbers or the sequences of numbers in the squares of the bingo card. This lowers the customers' willingness to participate in the bingo game.

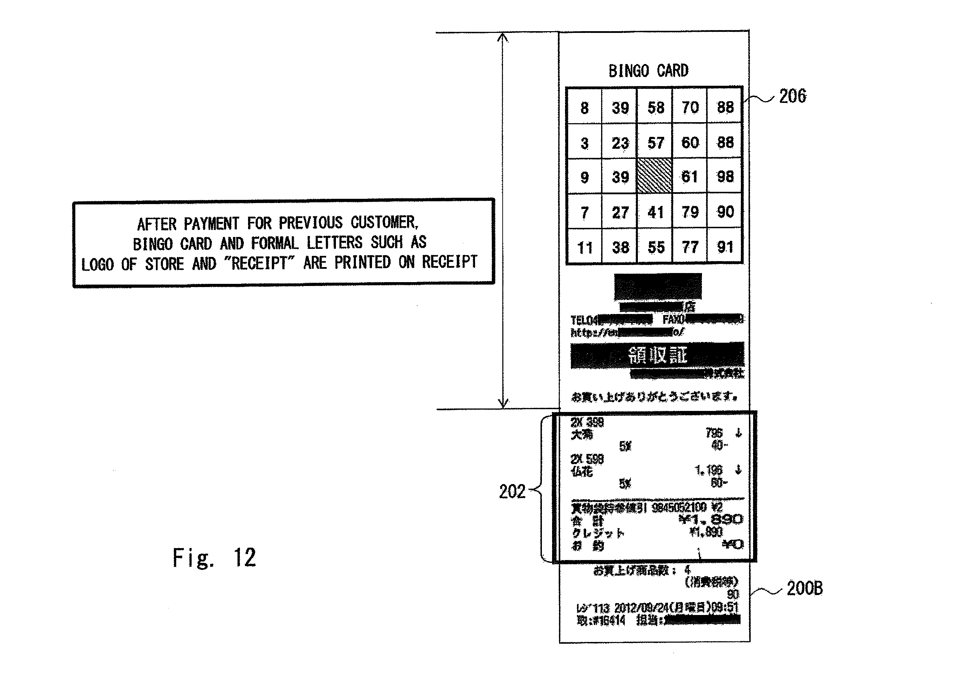

Also in the case of performing the bingo game using only one receipt with a bingo card, it is important to cause the customers to have a sense of trust in the bingo card printed on the receipt with a bingo card so that the customers' willingness to participate in the bingo game can be increased. In a normal receipt printing operation, in general, printing of a receipt for the next customer is started immediately after the issuance of the receipt to the customer after completion of the payment settlement process for the previous customer, and formal printed letters, such as the logo of the store, "receipt", and information about the sales clerk, are printed at an upper position of the receipt before the commodity registration operation for the next customer is started. Accordingly, in the case of using the receipt 200A with a bingo card, for example, as shown in Fig. 12, the image of the bingo card is printed not at the lowermost position of the receipt with a bingo card, but at the uppermost position of the receipt. Printing of the bingo card image and the formal printed letters such as the logo of the store, "receipt", and information about the sales clerk is started immediately after completion of the issuance of the receipt for the previous customer, and the printing is completed before the commodity registration operation for the next customer is started.

Fig. 12 is an explanatory diagram for explaining an example of printing a receipt with a bingo card when a bingo card image is disposed at the uppermost position of the receipt. As in a receipt 200B with a bingo card shown in Fig. 12, a bingo card image 206 is disposed at the uppermost position of the receipt. As described above, printing of the bingo card image and the formal printed letters such as the logo of the store, "receipt", and information about the sales clerk is started immediately after completion of the issuance of the receipt for the previous customer, and the printing is completed before the commodity registration operation for the next customer is started. Accordingly, the receipt 200B with a bingo card shown in Fig. 12 comes out of the printing unit 14 (receipt printer), which allows the next customer to view the bingo card image 206 before execution of the commodity registration. Therefore, since the bingo card image 206 for the customer is output, the customer can recognize that the store has not intentionally selected the numbers and the sequences of numbers in the squares of the bingo card image 206, regardless of the purchased commodities. In this state, the purchased commodity registration operation for the customer is started and the payment settlement process is carried out, and the purchased commodity information 202 is then printed on the receipt 200B with a bingo card. This leads to an increase in the customers' willingness to participate in the bingo game.

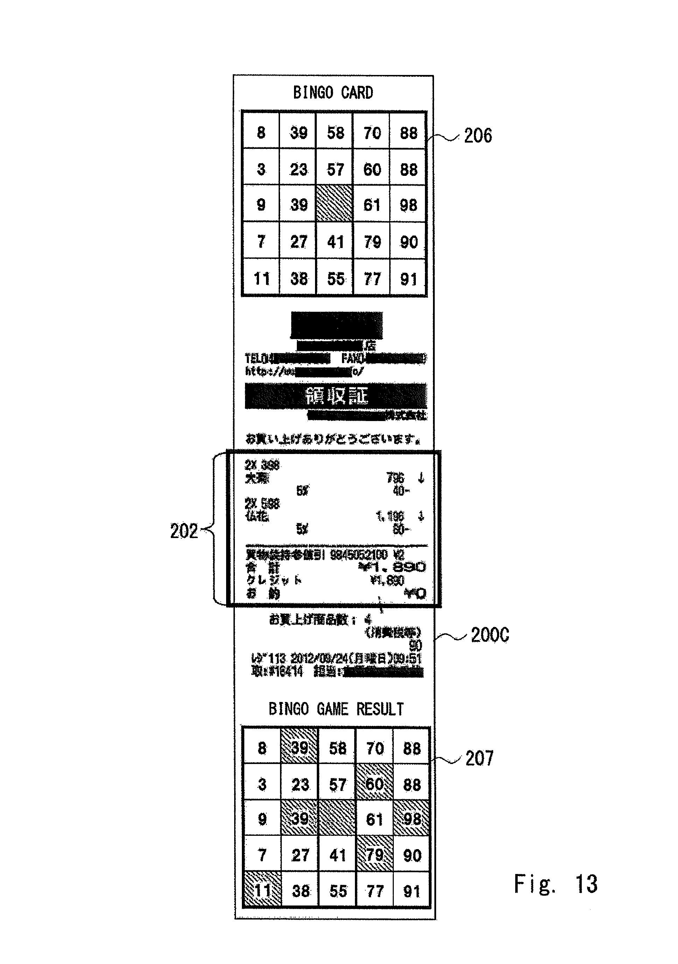

If the customer does not have enough time to enjoy the bingo game, the POS devices 10 and 10A may automatically determine whether or not a bingo has occurred, and the bingo game result indicating whether or not a bingo has occurred may be additionally printed on the receipt with a bingo card. Fig. 13 is an explanatory diagram for explaining an example of printing a receipt with a bingo card when both the bingo card image and the bingo game result indicating whether or not a bingo has occurred.

Also in a receipt 200C with a bingo card shown in Fig. 13, as in the case of the receipt 200B with a bingo card shown in Fig. 12, the bingo card image 206 is printed on the uppermost position of the receipt during the period between the time immediately after completion of the issuance of the receipt for the previous customer and the time when the commodity registration operation for the next customer is started. This allows the customers to have a sense of trust in the bingo card. In this case, if the next customer requests the POS devices 10 and 10A to automatically determine whether or not a bingo has occurred, the process for automatically determining whether or not a bingo has occurred is activated after completion of the purchased commodity registration operation for the customer, execution of the payment settlement process, and printing of the purchased commodity information 202 on the receipt 200C with a bingo card.

When the process for automatically determining whether or not a bingo has occurred is activated in the POS devices 10 and 10A, the extracted numbers 204, which are extracted from the number information included in the purchased commodity information 202, are compared with the numbers in the squares on the bingo card image 206 printed at the uppermost position of the receipt 200C with a bingo card, and the comparison result is printed at the lowermost position of the receipt 200C with a bingo card as a bingo game result 207. The receipt 200C with a bingo card, on which the information including the bingo game result 207 is printed, is handed to the customer together with the commodities. In this case, if the bingo game result 207 shows the state in which a bingo has occurred, a discount ticket, a coupon, or the like may be issued. This allows the customer to immediately receive the privileges, such as a free gift, a discount ticket, or a coupon, during the payment settlement process.

### (System Configuration Example of Second Exemplary Embodiment)

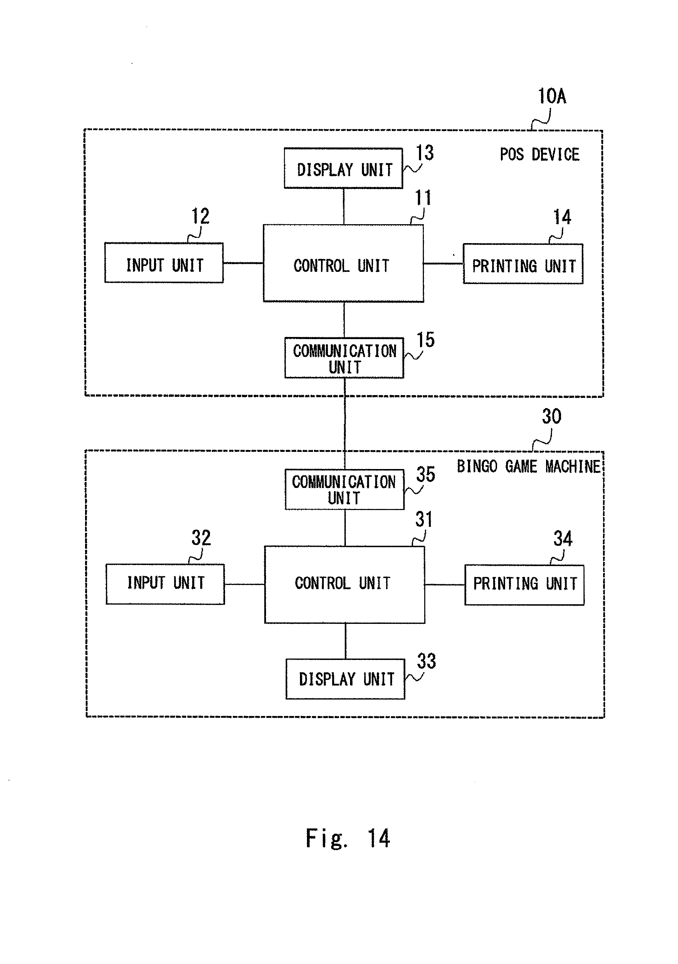

Next, a system configuration example of a sales promotion system according to a second exemplary embodiment of the present invention will be described. Fig. 14 is a system configuration diagram showing a system configuration example of the sales promotion system according to the second exemplary embodiment of the present invention, and illustrates an example in which a POS device and a bingo game machine are connected to each other instead of connecting the POS device 10A and the bingo card automatic determination machine 20 according to the first exemplary embodiment shown in Fig. 2. Specifically, the first exemplary embodiment illustrates the case where the bingo card 100 selected by the sales clerk or the customer is handed to the customer during the payment settlement process, to thereby enable the customer to enjoy the bingo game using the bingo card 100 and the number information relating to the purchased commodities printed on the receipt 200, or if the customer does not have enough time to enjoy the bingo game, whether or not a bingo has occurred in the bingo card 100 handed to the customer is automatically determined. On the other hand, the second exemplary embodiment illustrates a case where, instead of handing over a bingo card to each customer, images of a plurality of bingo games are sequentially displayed one by one on the screen of the display unit of the bingo game machine at short time intervals (for example, at intervals of one second), and the bingo card image displayed on the screen when the customer presses the "STOP" button at any timing is used as the bingo card for the bingo game of the bingo game machine.

As shown in Fig. 14, the POS device 10A, which is one of the devices that constitute the sale promotion system according to the present invention, has the same configuration as that of the POS device 10A shown in Fig. 2, and includes at least the control unit 11, the input unit 12, the display unit 13, the printing unit 14, and the communication unit 15. In this case, however, unlike the bingo card automatic determination machine 20 as a connection counterpart shown in Fig. 2, the communication unit 15 is a section that communicates a bingo game machine 30, which is the other one of the devices that constitute the sales promotion system shown in Fig. 14, and is configured using a communication system, such as a wired/wireless LAN (Local Area Network) or Bluetooth, as in the case of Fig. 2.

The bingo game machine 30, which is one of the devices that constitute the sales promotion system shown in Fig. 14, includes at least a control unit 31, an input unit 32, a display unit 33, a printing unit 34, and a communication unit 35. The control unit 31 is a section that controls the entire bingo game machine 30. The input unit 32 is a section that inputs information to the bingo game machine 30, and includes, for example, a barcode reader, touch panel keys, and a keyboard. The display unit 33 is a section that displays the information received from the bingo game machine 30 for the operator, and includes, for example, an LCD. The printing unit 34 is a section that prints bingo game results and the like, and includes, for example, a thermal printer. The communication unit 35 is a section that communicates with the POS device 10A, which is one of the devices that constitute the sales promotion system shown in Fig. 14, by using a communication system such as a wired/wireless LAN (Local Area Network) or Bluetooth.

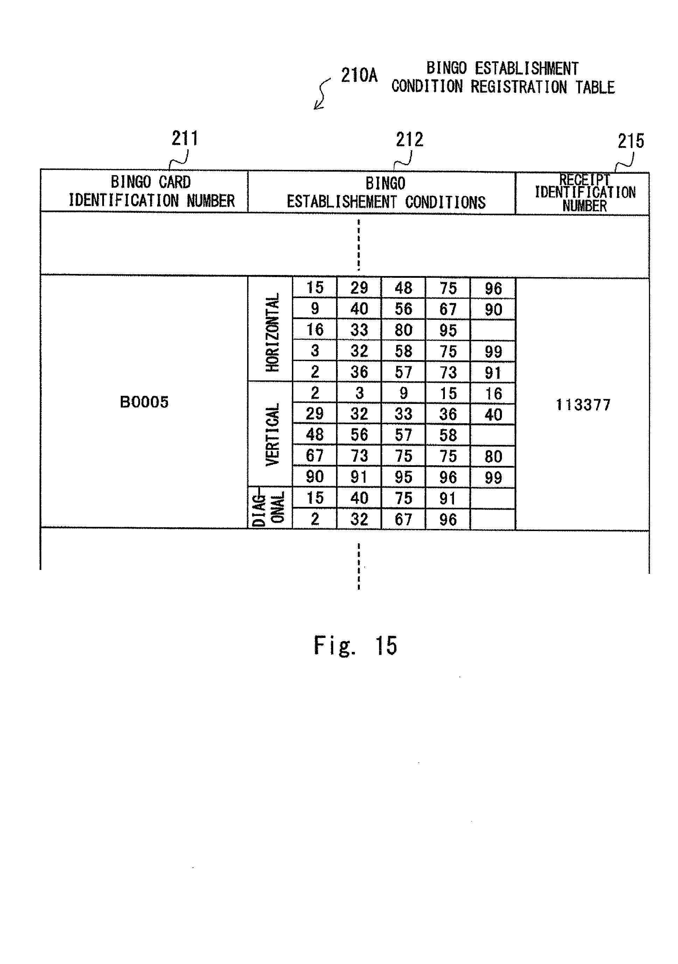

In this case, as in the case of the bingo card automatic determination machine 20 of the first exemplary embodiment, the bingo game machine 30 includes the bingo establishment condition registration table in which a combination of numbers that form a bingo pattern is registered in advance as the bingo establishment condition for each piece of information (bingo card identification number) for identifying a bingo card image. The bingo establishment condition registration table may also be provided in the POS device 10A in some cases. In the second exemplary embodiment, as described above, since bingo cards are not distributed to the customers, as shown in Fig. 15, the configuration of the bingo establishment condition registration table is slightly different from the configuration of the bingo establishment condition registration table 210 which is shown in Fig. 7 as the first exemplary embodiment. Fig. 15 is a table showing an example of the bingo establishment condition registration table that is different from the bingo establishment condition registration table shown in Fig. 7 which is included in the bingo game machine 30 or the POS device 10A.

A bingo establishment condition registration table 210A shown in Fig. 15 includes at least the bingo card identification number 211, the bingo establishment conditions 212, and a receipt identification number 215. The field of the receipt identification number 215 is provided instead of the distribution flag 213 and the determination flag 214 in the bingo establishment condition registration table 210 shown in Fig. 7. The field of the receipt identification number 215 is empty until a bingo card image is selected by a customer. When a bingo card image is selected, the receipt identification number, which is printed on the receipt and is input to the input unit 32 by the customer, is registered in the field of the receipt identification number 215. As a result, the receipt and the bingo card image for the bingo game are linked to each other, so that the bingo establishment conditions can be accessed even when the process for one of the bingo card image and the receipt is carried out.

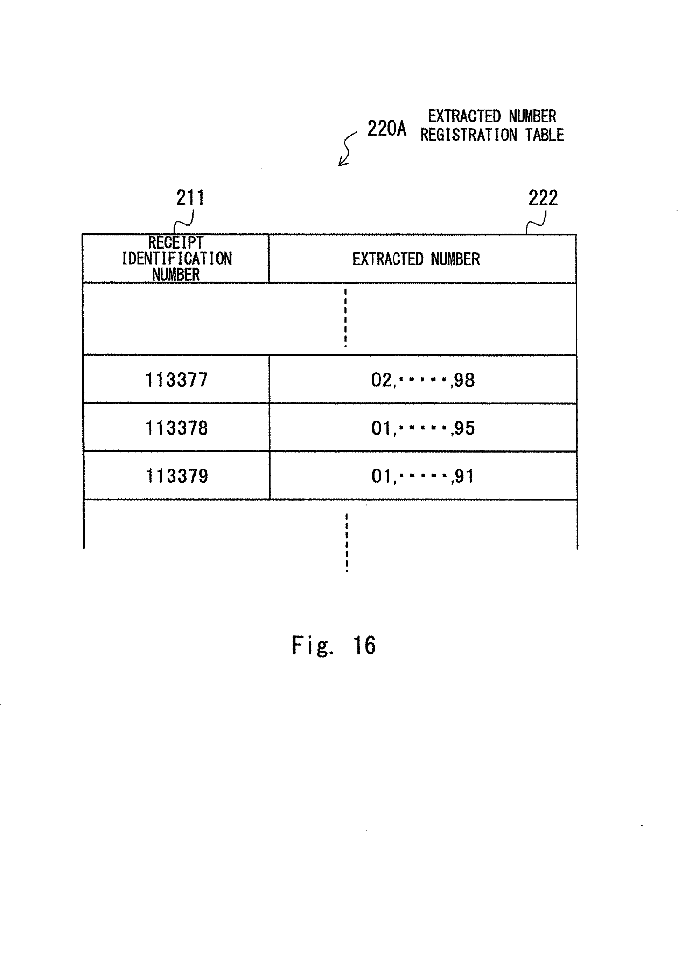

As in the case of the first exemplary embodiment, the POS device 10A that executes the payment settlement process for the purchased commodities includes the extracted number registration table in which a combination of two adjacent numbers from the number information relating to the purchased commodities printed on the receipt 200 is registered as the extracted numbers, which are used for the bingo game, for each information (receipt identification number) for identifying the receipt 200, during the payment settlement process. In some cases, the extracted number registration table may be provided in a specific POS device 10A or the bingo card automatic determination machine 30 in a centralized manner, instead of providing the extracted number registration table in each POS device 10A in a distributed manner. The extracted numbers extracted during the payment settlement process in each POS device 10A may be transferred to a specific POS device or the bingo game machine 30, together with the identification number of the corresponding receipt. In the second exemplary embodiment, bingo card images and receipts are linked together in the bingo establishment condition registration table 210A. Accordingly, as shown in Fig. 16, the configuration of the extracted number registration table is slightly different from the configuration of the extracted number registration table 220 which is shown in Fig. 9 as the first exemplary embodiment. Fig. 16 is a table showing an example of the extracted number registration table which is different from the extracted number registration table shown in Fig. 9 which is included in the POS device 10A.

An extracted number registration table 220A shown in Fig. 16 is composed of the fields of the receipt identification number 221 and the extracted number 222. The field of the bingo card identification number 223 in the extracted number registration table 220 shown in Fig. 9 is deleted in the extracted number registration table 220A.

### (Explanation of Operation of Second Exemplary Embodiment)

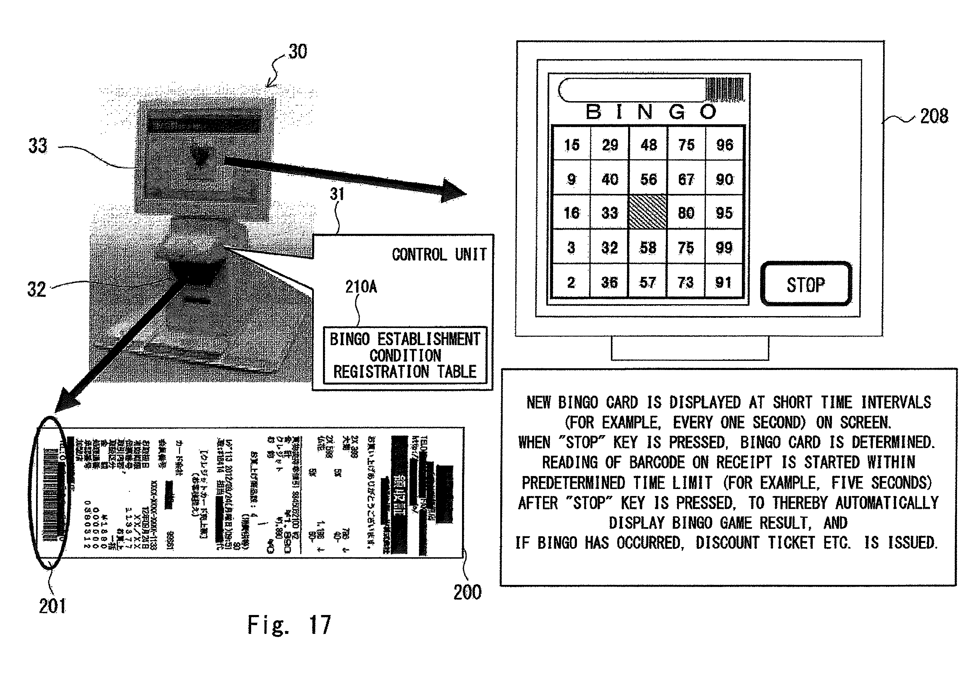

Next, an example of the operation of the sales promotion system shown in Fig. 14 as the second exemplary embodiment will be described with reference to the explanatory diagram of Fig. 17. Fig. 17 is an explanatory diagram for explaining an example of the operation of the bingo game machine 30 installed at a service counter or the like.

In the bingo game machine 30, a plurality of bingo card images, which are displayed on the screen of the display unit 33, while being sequentially switched at predetermined short time intervals, to cause a customer to randomly select a bingo card used for a bingo game, are provided in advance in such a manner that the plurality of bingo card images are linked to information (bingo card identification number) for identifying each bingo card image. Further, as described above, the data on the bingo establishment conditions representing combinations of numbers that form a bingo pattern in each bingo card image are registered in advance in the bingo establishment condition registration table 210A for use in determining whether or not a bingo has occurred.

The customer who has finished the payment settlement process in the POS device 10A and has received the receipt together with the commodities moves to the service counter or the like, where the bingo game machine 30 is installed, to play the bingo game, and asks the sales clerk (clerk in charge) for use of the bingo game machine 30. When the request is accepted, the customer moves to the bingo game machine 30 and presses the "START" button displayed on the screen of the display unit 33, to thereby start the bingo game.

Upon detecting that the "START" button is pressed, the bingo game machine 30 sequentially selects bingo card images randomly from among the plurality of bingo card images registered in advance, and sequentially displays selected bingo card images 208 on the screen of the display unit 33 while switching the bingo card image to a new bingo card image 208 at predetermined short time intervals (for example, at intervals of one second). The reason for sequentially switching the bingo card image to the new bingo card image 208 at short time intervals (for example, at intervals of one second) is that it is intended to prevent the customer from being given enough time to select the bingo card image in which a bingo has occurred, while viewing the information printed on the receipt 200.

When the customer presses the "STOP" button displayed on the screen of the display unit 33, while viewing the state in which the bingo card images are sequentially displayed on the screen of the display unit 33 while being switched to the new bingo card image 208, the bingo game machine 30 stops the operation of switching the bingo card image 208 on the display unit 33, and determines that the customer has selected the bingo card image 208, which is displayed on the screen when the "STOP" button is pressed, as the bingo card used for the bingo game.

Upon confirming that the operation of switching the bingo card image 208 is stopped when the "STOP" button is pressed and the selected bingo card image 208 is fixedly displayed on the display unit 33, the customer performs the operation of reading the barcode 201 on the receipt 200 by the input unit 32 within a predetermined time limit (for example, within five seconds) after the "STOP" button is pressed. If the operation of reading the barcode 201 on the receipt 200 by the input unit 32 is not started within the time limit (for example, within five seconds) after the pressing of the "STOP" button is detected, the bingo game machine 30 determines that the bingo game is invalid, and forces the bingo game to quit and restores to the initial state. In this case, the bingo game is forced to quit if the predetermined time limit is exceeded. This is because it is intended to prevent the customer from being given enough time to determine whether or not to continue the bingo game, while viewing the information printed on the receipt 200 and the bingo card image 208 which is fixedly displayed.

On the other hand, when the bingo game machine 30 detects that the operation of reading the barcode 201 on the receipt 200 by the input unit 32 is started within the time limit (for example, five seconds) after detecting the pressing of the "STOP" button, the bingo game is continued. When the operation of reading the barcode 201 is completed, the information (receipt identification number) for identifying the receipt 200 included in the barcode 201 is registered in the field of the receipt identification number 215 of the bingo establishment condition registration table 210A shown in Fig. 15, to thereby link the receipt 200 to the bingo card identification number representing the selected bingo card image 208 and the bingo establishment condition for the bingo card image 208. Further, the bingo game machine 30 transmits a transfer request for the extracted numbers 204 relating to the receipt 200 to the POS device 10A, which has issued the receipt 200 discriminated based on the information included in the read barcode 201, via the communication unit 35. Note that as described above in the first exemplary embodiment, the information for identifying the POS device 10A, which has executed the payment settlement process and has issued the receipt 200 to the customer, may be printed on the barcode 201, in addition to the receipt identification number for identifying the receipt 200.

The POS device 10A which has executed the payment settlement process and has received the transfer request for the extracted numbers 204 refers to the extracted number registration table 220A shown in Fig. 16, based on the receipt identification number included in the transfer request, to extract the extracted numbers 204 for the bingo game from the number information relating to the purchased commodities printed on the corresponding receipt 200, and returns the extracted numbers to the bingo game machine 30 which has transmitted the transfer request.

Upon acquisition of the extracted numbers 204 relating to the receipt 200 from the POS device 10A, which has executed the payment settlement process, via the communication unit 35, the bingo game machine 30 extracts the data on the bingo establishment condition for the bingo card image 208, with which the bingo game is being executed, by referring to the bingo establishment condition registration table 210A, and compares each combination of numbers representing the bingo establishment condition with the extracted numbers 204 obtained from the POS device 10A, thereby automatically determining whether or not a bingo has occurred. Further, the determination result is displayed on the screen of the display unit 33 to notify the customer of the determination result.

Upon detecting that a bingo has occurred, the bingo game machine 30 causes the printing unit 34 to print a winning certificate indicating that the customer has won the bingo game. The customer who has won the bingo game shows the winning certificate to the sales clerk (clerk in charge) at the service center or the like, so that the customer can receive a free gift, a discount ticket, or a coupon. Note that upon detecting that a bingo has occurred, the bingo game machine 30 may automatically perform the operation of causing the printing unit 34 to print a discount ticket, a coupon, or the like and outputting a free gift or the like so that the customer can receive the free gift or the like directly from the bingo game machine 30.

As described above, when the extracted number registration table 220A is provided in a specific POS device 10A in a centralized manner, instead of providing the extracted number registration table 220A in each POS device 10A, which executes the payment settlement process, in a distributed manner, the bingo game machine 30 may transmit the transfer request for the extracted numbers 204 to the specific POS device 10A, the transmission destination of which is specified. Further, when the bingo game machine 30 itself is used as the specific POS device 10A, the extracted number registration table 220A in which the extracted numbers 204 for the bingo game are registered is included in the bingo game machine 30, which eliminates the need for transmitting the transfer request for the extracted numbers 204 via the communication unit 35.

While the above exemplary embodiment illustrates the case where the bingo game machine 30 automatically determines whether or not a bingo has occurred, the present invention is not limited to this case. For example, at the time when the bingo game machine 30 detects that the "STOP" button is pressed by the customer, the bingo game machine 30 may cause the printing unit 34 to print the bingo card image 208, which is displayed on the screen of the display unit 33, as the bingo card 100 selected by the customer, and the printed bingo card may be handed to the customer. In other words, the bingo game machine 30 functions as a device that enables the customer to randomly select the bingo card 100 used for the bingo game. In this case, as in the case described above as the first exemplary embodiment, the customer can enjoy the bingo game by using the bingo card 100 issued from the bingo game machine 30, while viewing the receipt 200, or if the customer does not have enough time to enjoy the bingo game, the bingo card automatic determination machine 20 or the POS devices 10 and 10A for bingo determination can determine whether or not a bingo has occurred.

Also in the second exemplary embodiment, the combination of the receipt and the card image is not limited to the combination of one receipt 200 and one bingo card image 208, as in the first exemplary embodiment. Needless to say, a combination of one or more receipts 200 and one or more bingo card images 208 may be used, and a plurality of bingo game results may be added up and whether or not a bingo has occurred may be determined based on the addition result.

Specifically, for example, after execution of the payment settlement process for the purchased commodities, one or more bingo cards 100 may be handed to the customer in exchange for one receipt 200 handed to the customer, and the extracted numbers 204 extracted from the one receipt 200 may be compared with the number sequence 102 on each of the one or more bingo cards 100, to thereby determine whether or not a bingo has occurred. In another alternative, one bingo card 100 which is linked to a plurality of receipts 200 may be handed to the customer, and the extracted numbers 204 extracted from the plurality of receipts 200 may be compared with the number sequence 102 on the one bingo card 100, to thereby determine whether or not a bingo has occurred. More alternatively, a plurality of bingo cards 100 which are linked to a plurality of receipts 200 may be handed to the customer, and the extracted numbers 204 extracted from the plurality of receipts 200 may be compared with the number sequence 102 on each of the plurality of bingo cards 100, to thereby determine whether or not a bingo has occurred. Moreover, as described above in the first exemplary embodiment with reference to Figs. 11, a plurality of bingo game results may be added up for each square, to thereby determine whether or not a bingo has occurred.

The above exemplary embodiment illustrates the case where, instead of issuing the bingo card 100 to a customer, in the state in which the new bingo card image 208 is sequentially switched and displayed on the screen of the display unit 303 of the bingo game machine 30 when the customer presses the "START" button, it is determines that the bingo card image 208, which is displayed on the screen of the display unit 33 when the "STOP" button is pressed by the customer, is the bingo card image 208 selected by the customer, and the bingo game is executed using the selected bingo card image 208, or the bingo card image 208 is printed as a bingo card by the printing unit 34 and the printed bingo card is supplied to the customer. However, the present invention is not limited to this case. For example, in some cases, as in the bingo card automatic determination machine 20 of the first exemplary embodiment, when the bingo card 100 is issued to the customer during the payment settlement process in the POS device 10A and the customer plays the bingo game by using the bingo game machine 30, one or both of the barcode on the obtained bingo card 100 and the barcode on the receipt 200 may be read by the input unit 32 of the bingo game machine 30, to thereby cause the bingo game machine 30 to start the bingo game.

### (Explanation of Advantageous Effects of Exemplary Embodiments)

As described in detail above, the first and second exemplary embodiments provide the following advantageous effects.

First, a contrivance can be provided in which a bingo game can be performed using number information (commodity code, the number of purchased commodities, purchase unit price, total amount, discount rate, discount amount, etc.), which is linked to the purchased commodities printed on a receipt during a payment settlement process for the purchased commodities, so that privileges, such as a free gift, a discount ticket, or a coupon, can be handed only to the customers who have won the bingo game, and only the customers who have purchased commodities can participate in the game, thereby increasing the chance to win the bingo game in accordance with an increase in the number of pieces of number information linked to the purchased commodities printed on the receipt. This makes it possible to encourage the customers to purchase more commodities, give the customers a sense of satisfaction that they can participate in the bingo game and enjoy the game even if they cannot be granted the privileges when they lose the bingo game, and achieve both an increase in unit price per customer and acquisition of repeat customers.

Second, when the payment settlement process for the purchased commodities is carried out, a bingo card used for the bingo game is randomly selected from among bingo cards prepared in advance, regardless of which commodities the customers have purchased, and the selected bingo card is handed to the customers together with the commodities and the receipt. This enables the customers to easily understand that the obtained bingo card is not intentionally selected by the store. In addition, the customers are prevented from obtaining a bingo card before purchasing commodities and from selecting the commodities, based on which a bingo is obtained, according to the sequence of numbers on the obtained bingo card. Accordingly, the unit price per customer can be reliably increased.

Third, it is also possible to install a bingo card automatic determination machine or a POS device as a bingo determination device capable of automatically determining whether or not a bingo has occurred. Accordingly, customers who do not have enough time to play the bingo game can also receive the privileges, such as a free gift, a discount ticket, or a coupon, by immediately confirming whether or not a bingo has occurred, merely by causing the bingo determination device to read one or both of the receipt and the bingo card, without the need for the customers themselves to play the bingo game.

The configurations of preferred exemplary embodiments of the present invention have been described above. However, the above exemplary embodiments are merely examples of the present invention and do not limit the scope of the present invention. It can be understood by those skilled in the art that the present invention can be modified in various manners depending on the intended use without departing from the scope of the present invention.

This application is based upon and claims the benefit of priority from Japanese patent application No. 2013-47979, filed on March 11, 2013, the disclosure of which is incorporated herein in its entirety by reference.

### Industrial Applicability

The present invention is applicable to various business categories in which a receipt is issued.

### Reference Signs List

- 10: POS DEVICE
- 10A: POS DEVICE
- 11: CONTROL UNIT
- 12: INPUT UNIT
- 13: DISPLAY UNIT
- 14: PRINTING UNIT
- 15: COMMUNICATION UNIT
- 20: BINGO CARD AUTOMATIC DETERMINATION MACHINE
- 21: CONTROL UNIT
- 22: INPUT UNIT
- 23: DISPLAY UNIT
- 24: PRINTING UNIT
- 25: COMMUNICATION UNIT
- 30: BINGO GAME MACHINE
- 31: CONTROL UNIT
- 32: INPUT UNIT
- 33: DISPLAY UNIT
- 34: PRINTING UNIT
- 35: COMMUNICATION UNIT
- 100: BINGO CARD
- 101: BARCODE
- 102: NUMBER SEQUENCE
- 103: BINGO ESTABLISHMENT CONDITION
- 200: RECEIPT
- 200A: RECEIPT WITH BINGO CARD
- 200B: RECEIPT WITH BINGO CARD
- 200C: RECEIPT WITH BINGO CARD
- 201: BARCODE
- 202: PURCHASED COMMODITY INFORMATION
- 203: NUMBERS FOR BINGO GAME
- 204: EXTRACTED NUMBER
- 205: BINGO CARD IMAGE
- 206: BINGO CARD IMAGE
- 207: BINGO GAME RESULT
- 210: BINGO ESTABLISHMENT CONDITION REGISTRATION TABLE
- 210A: BINGO ESTABLISHMENT CONDITION REGISTRATION TABLE
- 211: BINGO CARD IDENTIFICATION NUMBER
- 212: BINGO ESTABLISHMENT CONDITION
- 213: DISTRIBUTION FLAG
- 214: DETERMINATION FLAG
- 215: RECEIPT IDENTIFICATION NUMBER
- 220: EXTRACTED NUMBER REGISTRATION TABLE
- 220A: EXTRACTED NUMBER REGISTRATION TABLE
- 221: RECEIPT IDENTIFICATION NUMBER
- 222: EXTRACTED NUMBER
- 223: BINGO CARD IDENTIFICATION NUMBER
- 301: ADDITION RESULT
- 302: ADDITION RESULT

## Claims

1. A sales promotion system comprising:
a POS (Point Of Sales) device that performs a payment settlement process for a purchased commodity and issues a receipt on which information about the purchased commodity is written, wherein
during the payment settlement process for the purchased commodity, a bingo card identification number for identifying a randomly-selected bingo card for a bingo game is input to the POS device, and the POS device extracts, as numbers for the bingo game to be compared with numbers in each square of the bingo card, a combination of two adjacent numbers from number information included in the information about the purchased commodity printed on the receipt, registers, in an extracted number registration table, the extracted combination of two numbers as extracted numbers for the bingo game in such a manner that the extracted combination of numbers is linked to the bingo card identification number and a receipt identification number for identifying the receipt, and prints the receipt identification number on the receipt on which the information about the purchased commodity is printed.

2. The sales promotion system according to Claim 1, wherein upon receiving the bingo card identification number, the POS device starts a settlement operation to carry out the payment settlement process for the purchased commodity, and outputs the receipt.

3. A sales promotion system comprising:
a POS (Point Of Sales) device that performs a payment settlement process for a purchased commodity and issues a receipt on which information about the purchased commodity is written, wherein
during the payment settlement process for the purchased commodity, the POS device selects a bingo card, or a bingo card is selected, from among a plurality of bingo cards for a bingo card, and the POS device extracts, as numbers for a bingo game to be compared with numbers in each square of the bingo card, a combination of two adjacent numbers from number information included in the information about the purchased commodity printed on the receipt, registers, in an extracted number registration table, the extracted combination of two numbers as extracted numbers for the bingo game in such a manner that the extracted combination of numbers is linked to a receipt identification number for identifying the receipt and the bingo card identification number for identifying the selected bingo card, prints the selected bingo card, and prints the receipt identification number on the receipt on which the information about the purchased commodity is printed.

4. The sales promotion system according to Claim 3, wherein prior to the payment settlement process for the purchased commodity, the POS device selects a bingo card from among a plurality of bingo cards for the bingo game, prints an image of the selected bingo card on the receipt, and thereafter starts the payment settlement process for the purchased commodity.

5. The sales promotion system according to any one of Claims 1 to 4, wherein
the POS device includes a bingo condition registration table in which a sequence of numbers that form a bingo pattern in the bingo card is registered as a bingo establishment condition in such a manner that the sequence of numbers is preliminarily linked to the bingo card identification number, and
the POS device determines whether or not a bingo has occurred in the bingo card by referring to the bingo condition registration table.

6. The sales promotion system according to any one of Claims 1 to 4, further comprising a bingo card automatic determination machine connected to the POS device via a communication line, wherein
upon receiving at least one of the receipt identification number and the bingo card identification number, the bingo card automatic determination machine determines whether or not a bingo has occurred in the bingo card by referring to the bingo condition registration table in which a sequence of numbers that form a bingo pattern in the bingo card is registered as a bingo establishment condition in such a manner that the sequence of numbers is preliminarily linked to the bingo card identification number.

7. The sales promotion system according to any one of Claims 1 to 6, wherein it is determined whether or not a bingo has occurred in the bingo card based on one of: a result of a comparison between the sequence of numbers in one or more bingo cards and the extracted numbers extracted from the receipt; a result of a comparison between the sequence of numbers in one bingo card and the extracted numbers extracted from one or more receipts; and a result of adding up, for each square of the bingo card, a plurality of sets of results of the comparison between the extracted numbers extracted from one receipt and the sequence of numbers in one bingo card.

8. A sales promotion system comprising:
a POS (Point Of Sales) device that performs a payment settlement process for a purchased commodity, and issues a receipt on which information about the purchased commodity is written; and
a bingo game machine that is connected to the POS (Point Of Sales) device via a communication line and has a function of executing a bingo game, wherein
during the payment settlement process for the purchased commodity, the POS device extracts, as numbers for a bingo game to be compared with numbers in each square of the bingo card, a combination of two adjacent numbers from number information included in the information about the purchased commodity printed on the receipt, registers, in an extracted number registration table, the extracted combination of two numbers as extracted numbers for the bingo game in such a manner that the extracted combination of numbers is linked to a receipt identification number for identifying the receipt, and prints the receipt identification number on the receipt on which the information about the purchased commodity is printed, and
when the receipt identification number is input and one of a plurality of bingo cards is selected, the bingo game machine determines whether or not a bingo has occurred in the selected bingo card by referring to the extracted number registration table and a bingo condition registration table in which a sequence of numbers that form a bingo pattern in the bingo card is registered as a bingo establishment condition in such a manner that the sequence of numbers is preliminarily linked to the bingo card identification number.

9. A sales promotion method for a POS (Point Of Sales) device that performs a payment settlement process for a purchased commodity, and issues a receipt on which information about the purchased commodity is written, the sales promotion method comprising:
inputting, during the payment settlement process for the purchased commodity, a bingo card identification number for identifying a randomly-selected bingo card for a bingo game to the POS device;
extracting, by the POS device, as numbers for the bingo game to be compared with numbers in each square of the bingo card, a combination of two adjacent numbers from number information included in the information about the purchased commodity printed on the receipt, registering, in an extracted number registration table, the extracted combination of two numbers as extracted numbers for the bingo game in such a manner that the extracted combination of numbers is linked to the bingo card identification number and a receipt identification number for identifying the receipt, and printing the receipt identification number on the receipt on which the information about the purchased commodity is printed.

10. A storage medium storing a sales promotion program that executes the sales promotion method according to Claim 9 as a computer-executable program.
